# FASCICULE DE BREVET EUROPEEN

(11) **EP 2 440 616 B1**
(45) Date de publication et mention de la délivrance du brevet: **31.07.2013**
(21) Numéro de dépôt: 10734153.9
(22) Date de dépôt: 10.06.2010
(51) Int. Cl.: C08L 83/04, C09D 183/04, C09J 183/04, C09J 5/00, F02F 11/00, F16J 15/00

(54) **PROCEDE D'ETANCHEIFICATION ET D'ASSEMBLAGE DE COMPOSANTS D'UN GROUPE MOTO-PROPULSEUR**
VERFAHREN ZUR VERSIEGELUNG UND MONTAGE DER KOMPONENTEN EINES ANTRIEBSSTRANGS
METHOD FOR SEALING AND ASSEMBLING COMPONENTS OF A DRIVE TRAIN

(30) Priorité: 12.06.2009 FR 0902847
(43) Date de publication de la demande: 18.04.2012
(73) Titulaire: Bluestar Silicones France, 69003 Lyon (FR)
(72) Inventeur: MALIVERNEY, Christian, F-69690 Saint Julien sur Bibost (FR); IRELAND, Tania, F-69002 Lyon (FR)
(74) Mandataire: Mekki, Boualem
(86) Numéro de dépôt international: PCT/FR2010/000421
(87) Numéro de publication internationale: WO 2010/142871

(56) Documents cités:
- EP-A1- 1 939 257
- EP-A1- 1 985 666
- US-A1- 2005 014 894

## Description

La présente invention a pour objet un procédé d'étanchéification et d'assemblage de composants d'un groupe moto-propulseur au moyen d'élastomères silicones préparés à partir de compositions silicones ne contenant pas de catalyseur métallique, tel que l'étain par exemple, et réticulant par des réactions de polycondensation en présence d'eau (par exemple humidité ambiante). Les élastomères silicones préparés à partir du procédé selon l'invention présentent:
- une vitesse de prise (réticulation sur au moins 2 mm en 24 heures) adaptés aux besoins des applications, et
- de bonnes propriétés de résistance mécanique telles que la résistance à la rupture, le module à 100 % d'allongement et la dureté shore, et
- une bonne résistance au vieillissement dans des fluides agressifs chimiquement tels que ceux utilisés par exemple dans un groupe motopropulseur en l'occurrence les huiles moteur, les lubrifiants pour boîte de vitesse et pont, les mélanges huile/essence, les liquides de refroidissement, les fuels ou les liquides antigel.

Par "liquide de refroidissement", on entend tout liquide caloporteur utilisé pour évacuer les calories d'un système mécanique ou électronique.

Les compositions silicones réticulables en élastomère pour former des joints d'étanchéité sont connues. En effet, elles conviennent en particulier pour la formation de joints d'étanchéité "in-situ", qui sont formés directement lors de l'assemblage des éléments, en particulier dans le domaine de l'automobile.

Parmi les compositions silicones réticulables en élastomère connues pour ce type d'application, celles qui réticulent dès la température ambiante forment une catégorie qui attire toute l'attention car elles ne nécessitent pas la mise en place de four consommateur d'énergie.

Ces compositions silicones sont classées en 2 groupes distincts: les compositions monocomposantes (RTV-1) et les compositions bi-composantes (RTV-2). Le terme "RTV" est l'acronyme pour "Room Temperature Vulcanising".

Lors de la réticulation, l'eau (soit apportée par une humidité atmosphérique dans le cas des RTV-1, soit introduite dans une partie de la composition dans le cas des RTV-2 permet la réaction de polycondensation, qui conduit à la formation du réseau élastomère.

Généralement, les compositions monocomposantes (RTV-1) réticulent quand elles sont exposées à l'humidité de l'air. Le plus souvent, la cinétique des réactions de polycondensation est extrêmement lente; ces réactions sont donc catalysées par un catalyseur approprié.

Quant aux compositions bicomposantes (RTV-2), elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398.

Ces compositions comportent généralement au moins 3 ou 4 ingrédients différents:
- un polymère silicone réactif (à fonctions de type hydroxyle ou pré-fonctionnalisées par un silane de façon à présenter des extrémités alcoxy),
- un agent de réticulation, généralement un silane, un silicate ou un polysilicate,
- un catalyseur de condensation, et
- éventuellement de l'eau (dans le cas de RTV-2).

Le plus souvent, le catalyseur de condensation est à base d'un composé organique d'étain. En effet, de nombreux catalyseurs à base d'étain ont déjà été proposés comme catalyseur de réticulation de ces RTV-1 ou RTV-2. Des catalyseurs de polycondensation classiques comprennent des composés de dialkylétain, notamment des dicarboxylates de dialkylétain tels que le dilaurate et le diacétate de dibutylétain, les composés de titanate d'alkyle tels que le tétrabutyl ou le tétraisopropyltitanate, et les chélates de titane (EP-A-0 885 933, US-5 519 104, US-A-4,515,932, US-A-4,563,498, US-A-4,528,353).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Dans un but de remplacer ces catalyseurs, la demande internationale WO-2004/020525 décrit des compositions silicones monocomposantes (RTV-1) utilisées pour préparer des mastics ou des adhésifs et qui réticulent à froid quand elles sont exposées à l'humidité de l'air et comprenant en plus des composants habituels :
- un réticulant (D) spécifique et essentiel qui est un silane à fonctions 1-méthylvinyloxy connu pour sa forte réactivité comparée à celle des réticulants classiques, et
- des catalyseurs qui sont des dérivés organiques à fonction imines de formules (I) ou (II) suivantes: 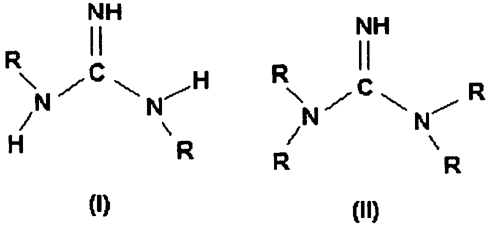
avec R étant un radical spécifique choisi parmi les groupes suivants : méthyle, isopropyle, phényle et orthotolyle. Des exemples de ces dérivés organiques de type imine sont la 1,3-diphénylguanidine, la 1,3-di-o-tolylguanidine, la 1,3-diméthylguanidine et la 1,1,3,3-tétraméthylguanidine qui est le dérivé préféré.

Ces dérivés présentent la particularité de posséder une fonction imine non substituée, c'est-à-dire une fonction du type C=NH. Il est à noter qu'un réticulant classique de type trialcoxysilane, composant (E), est toujours utilisé en association avec le réticulant (D) qui est un silane connu pour sa forte réactivité due à la présence de fonctions de type 1-méthylvinyloxy.

Cependant, le problème associé à l'utilisation des catalyseurs organiques à fonction imines décrits dans la demande internationale WO 20041020525 est qu'ils doivent être utilisés en présence de réticulants spécifiques très réactif et coûteux (silanes à fonctions 1-méthylvinyloxy), c'est à dire que des réticulants classiques de structures simples, qui sont très largement utilisés dans les formulations RTV-I ou RTV-II, tels que par exemple les alkyltrialcoxysilanes, les silicates d'alkyle ou les polysilicates d'alkyle, ne peuvent leur être associés sans la présence obligatoire d'un réticulant très réactif tel que le silane à fonctions 1-méthylvinyloxy. En effet, sans la présence de ce silane très réactif la réticulation de la composition en élastomère est alors insuffisante et ne permet pas d'obtenir de bonnes propriétés mécaniques. Ainsi, le dérivé 1,1,3,3-tétraméthylguanidine (TMG), qui est présenté dans le mode de réalisation préférentiel de cette demande de brevet, lorsqu'il est utilisé avec un réticulant classique, tel que par exemple un polysilicate d'alkyle, et sans la présence d'un silane réactif à fonction méthylvinyloxy, dans un RTV monocomposant (RTV-I), la réticulation du système est alors insuffisante et ne peut générer un élastomère silicone.

Par ailleurs, EP 1 985 666 A1 décrit des composés amine uniquement en tant que catalyseurs de condensation de polymères organiques.

Pour un développement durable, il apparaît donc nécessaire de trouver de nouvelles compositions silicones réticulant à la température ambiante de manière à former des joints d'étanchéité silicones à l'aide de catalyseurs, non toxiques, et utilisables à la fois dans la réticulation des compositions formant des élastomères à partir de formulations mono-ou bi-composantes.

Lors de sa prise, le joint forme d'abord une peau superficielle (prise en surface), puis la réticulation doit se poursuivre à coeur jusqu'à durcissement complet (prise à coeur). La cinétique de prise est un critère essentiel de ces joints. Il est donc d'un grand intérêt de pouvoir disposer de compositions monocomposantes réticulables à coeur ayant une cinétique de prise aussi rapide que possible.

Il est important que ces catalyseurs puissent être utilisables avec un large panel de réticulants couramment utilisés dans la chimie industrielle des silicones.

De plus, face à une industrie du transport en pleine évolution, on voit apparaître de nouvelles contraintes liées à l'augmentation des rendements moteurs, à l'augmentation des températures de fonctionnement, à la diminution de la consommation en carburant et à la diminution de la fréquence d'entretien.

Ainsi, les formulateurs de fluides motopropulseurs (huile moteur, lubrifiant pour boite de vitesse et pont, mélange huile/essence, liquide de refroidissement, fuel ou liquide antigel) continuent d'améliorer les performances de ces produits par l'addition d'additifs de plus en plus efficace. La quantité d'additifs incorporée dans ces produits augmente de plus en plus, ce qui a pour effet d'augmenter leur agressivité chimique vis à vis des organes souples, par exemple les joints d'étanchéité, présents dans les dispositifs dans lesquels ces produits sont utilisés.

Il existe donc un besoin croissant pour trouver un nouveau procédé d'étanchéification et d'assemblage de composants d'un groupe moto-propulseur utilisant des élastomères silicones préparés à partir d'une composition d'organopolysiloxane ne contenant pas d'étain et qui présentent une bonne résistance au contact des différents fluides utilisés dans ces groupes motopropulseur.

Ainsi, un des objectifs essentiels de la présente invention est de proposer un procédé mettant en oeuvre une composition d'organopolysiloxane ne contenant pas d'étain et durcissant en un élastomère silicone en présence d'humidité avec une cinétique de prise en surface rapide, suivie d'une prise à coeur complète de manière à préparer des élastomères silicones utiles pour l'étanchéification et l'assemblage d'élément d'un groupe moto-propulseur.

Un autre objectif est de proposer un nouveau procédé d'étanchéification et d'assemblage de composants d'un groupe moto-propulseur au moyen de joints silicones ayant une bonne résistance au contact des différents fluides utilisés dans un groupe motopropulseur et préparés à partir de compositions silicones utilisant des catalyseurs non toxiques.

Ces objectifs, parmi d'autres, sont atteints par la présente invention qui concerne un nouveau procédé d'étanchéification et d'assemblage d'au moins un composant d'un groupe moto-propulseur comprenant les étapes a) à d) suivantes:
a) on prépare une composition X polyorganosiloxane réticulable en élastomère par des réactions de polycondensation, ne contenant pas de catalyseur métallique et comprenant:
   - une base silicone B comprenant au moins une huile polyorganosiloxane réticulable par réaction de polycondensation de manière à former un élastomère silicone, et
   - une quantité catalytiquement efficace d'au moins un catalyseur de polycondensation A qui est un composé organique non silylé et répondant à la formule générale (I): 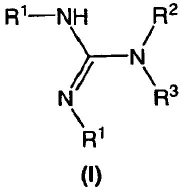
   dans laquelle,
   - les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
   - le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine, et
   - le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine,
   - lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants, et
   - avec la condition supplémentaire que les radicaux R¹, R² et R³ ne comprennent pas d'atome de silicium,
b) on applique ladite composition polyorganosiloxane X sur au moins une zone de contact dudit composant de manière continue ou discontinue et éventuellement sous la forme d'un cordon,
c) on laisse réticuler ladite composition polyorganosiloxane X en élastomère silicone en présence d'humidité apportée par l'air ambiant ou par addition préalable d'eau de manière à former un joint d'étanchéité profilé sur pièce, et
d) on assemble ledit composant à un autre composant du groupe moto-propulseur de manière à ce que le joint formé assure l'assemblage et l'étanchéité entre les deux composants du groupe moto-propulseur.

Pour atteindre cet objectif, la Demanderesse a eu le mérite de mettre en évidence, de manière tout à fait surprenante et inattendue, que l'utilisation d'une composition polyorganosiloxane X comprenant le catalyseur de polycondensation A selon l'invention permet de préparer selon le procédé de l'invention des élastomères silicones ayant une cinétique de prise en surface remarquablement rapide, suivie d'une prise à coeur complète de manière à préparer des élastomères silicones permettant l'étanchéification et l'assemblage, de composants ou d'éléments utilisés dans un groupe moto-propulseur.

De plus, les élastomères silicones utilisés dans le procédé selon l'invention présentent l'avantage de maintenir de bonnes propriétés mécaniques même lorsqu'ils sont en contact prolongé avec des fluides agressifs sur le plan chimique tels que ceux utilisés par exemple dans un groupe motopropulseur.

Comme exemple de fluides agressifs sur le plan chimique on peut citer par exemple: les huiles pour moteur, les lubrifiants pour boite de vitesse et pont, les mélanges huiles/essence, les liquides de refroidissement, les fuels et les liquides antigel.

Il est aussi du mérite des inventeurs d'avoir vaincu le préjugé technique, tel qu'enseigné par exemple par la demande internationale WO 2004/020525, qui voulait que, jusqu'alors, les catalyseurs proches en terme de structure, tels que la 1,3-diphénylguanidine, la 1,3-di-o-tolylguanidine, la 1,3-diméthylguanidine ou la 1,1,3,3-tétraméthylguanidine devaient être associés à des réticulants spécifiques très réactif et coûteux (silanes à fonctions 1-méthylvinyloxy), pour réticuler des formulations de type RTV.

Les composés non silylés utilisés selon le procédé de l'invention et répondant à la formule générale (I) sont des guanidines 1,2,3-trisubstituées et 1,2,3,3-tétrasubstituées et présentent l'avantage d'être liquides, incolores, inodores et solubles dans les matrices silicones. Les guanidines non silylées selon l'invention sont mises en oeuvre dans les systèmes silicones à réticuler à des teneurs très faibles, et permettent suivant la teneur d'adapter les temps de travail à l'application tout en garantissant des excellentes duretés des élastomères obtenus, ainsi qu'une excellente stabilité thermique éliminant ainsi les problèmes liés aux phénomènes de réversion.

Selon un mode de réalisation particulier, les étapes c) et d) sont remplacées respectivement par les étapes c1) et d1) suivantes:
c1) on met en contact la ou les zone(s) contenant ladite composition polyorganosiloxane X non réticulé avec une surface de contact de l'autre composant du groupe moto-propulseur et on assemble les deux composants du groupe moto-propulseur, et
d1) on laisse réticuler ladite composition polyorganosiloxane X en élastomère silicone en présence d'humidité apportée par l'air ambiant ou par addition préalable d'eau de manière à former un joint d'étanchéité flué assurant l'assemblage et l'étanchéité entre les deux composants du groupe moto-propulseur.

Dans le domaine de l'automobile, les élastomères silicones sont souvent utilisés sous la forme de joints silicones. Le terme "joints silicones" englobent plusieurs types de joints d'étanchéités, à savoir les joints "flués" (JF) également appelés joints écrasés et les joints profilés sur pièce (JPP) également appelés "joints en forme".

Les joints "flués" (JF) sont généralement formés à la suite de l'application d'un cordon pâteux des compositions sur la zone de contact entre 2 éléments métalliques ou plastiques à assembler. Le cordon pâteux est d'abord déposé sur l'un des éléments puis l'autre élément est appliqué sur le premier; il en résulte un écrasement du cordon avant qu'il ne se transforme en élastomère. Ce type de joints s'adresse à des assemblages ne devant pas être couramment démontés (joints de carter d'huile, joints de carter de distribution...).

Les joints "profilés sur pièce" (JPP) sont utilisés en particulier dans le secteur du transport et de l'automobile, pour des applications d'étanchéité sur toutes les pièces moteur exigeant une démontabilité telles à titre d'exemples, le couvre culasse, pompe à huile, pompe à eau, boîte à eau, carter d'huile, carter de distribution, guide d'embrayage. Les "joints profilés sur pièce" (JPP) sont généralement formés à la suite de l'application d'un cordon pâteux des compositions sur la zone de contact entre 2 éléments à assembler. Toutefois, après la dépose du cordon pâteux sur l'un des éléments on laisse réticuler le cordon en élastomère puis on applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère élastomérique, épouse les irrégularités des surfaces à jointoyer de ce fait, il est inutile d'usiner soigneusement les surfaces devant être mises en contact les unes avec les autres et de serrer avec force les assemblages obtenus. Ces particularités permettent de supprimer dans une certaine mesure, les joints de fixation, des entretoises, des nervures destinées habituellement à raidir et renforcer les éléments d'assemblages. Le "joint profilés sur pièce" est généralement un cordon fermé d'élastomère silicone de section ovoïde déposé selon un profil bien défini et devant assurer l'étanchéité de deux (ou plusieurs) pièces démontables.

Comme les compositions utilisées dans le procédé selon l'invention durcissent rapidement à température ambiante et même en milieu confiné, il en résulte que les joints d'étanchéité silicones découlant du durcissement de ces compositions peuvent être préparés dans des conditions de fabrication industrielle très contraignantes. Ils peuvent, par exemple, être fabriqués sur les chaînes de montage usuelles de l'industrie automobile munies d'un appareil automatique de dépose des compositions. Cet appareil automatique possède bien souvent une tête mélangeuse et une buse de dépose, celle-ci se déplaçant selon le profil des joints à fabriquer. Les compositions, fabriquées et distribuées au moyen de cet appareil ont de préférence une durée de durcissement bien ajustée pour d'une part éviter des prises en masse dans la tête mélangeuse et d'autre part obtenir une réticulation complète après la fin de la dépose du cordon pâteux sur les pièces à jointoyer. Ces joints "en forme" conviennent plus spécialement pour les joints de couvre-culbuteurs, de couvercles de boîtes à vitesses, d'entretoises de distribution et même de carters d'huile.

Le composant peut être de nature diverse et variée est en verre, en plastique, en métal...

Selon un autre mode de réalisation particulier du procédé selon l'invention le composant du groupe moto-propulseur est choisi parmi le groupe constitué par: une culasse, un carter d'huile, un couvre-culasse, un carter de distribution, un barreau de palier, un bloc cylindre moteur, une boîte de vitesses, une pompe à eau, un boîtier de réaspiration des gaz carter, un filtre à eau, un filtre à huile, une pompe à huile, un boitier comprenant des composants électroniques d'un groupe moto-propulseur ou un carter d'embrayage.

De manière générale, on applique la composition silicone sur le composant soit sous la forme de joint continu ou discontinu, soit sous la forme de couche continue ou discontinue, Pour former une couche continue ou discontinue, on peut utiliser les techniques de dépose ou d'enduction classiques.

Selon un mode de réalisation préféré, le catalyseur de polycondensation A est un composé organique non silylé répondant à la formule générale (1) et dans laquelle:
- les radicaux R₁, identiques ou différents, et le radical R₃ sont choisis, indépendamment les uns des autres, dans le groupe constitué par: un radical isopropyle, un radical cyclohexyle et un radical alkyle monovalent linéaire ou ramifié en C₁ - C₁₂.
- le radical R₂ représente un atome d'hydrogène, un groupe alkyle monovalent linéaire ou ramifié, un groupe cycloalkyle, un groupe alkyle substitué par un cycle, substitué ou non et pouvant comprendre au moins un hétéroatome, un groupe arylalkyle, un groupe fluoroalkyle, un groupe alkylamine ou alkylguanidine, et
- lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants.

Selon un mode de réalisation préféré, le catalyseur de polycondensation A est un composé organique non silylé choisi parmi le groupe constitué par les composés (A1) à (A6) suivants:

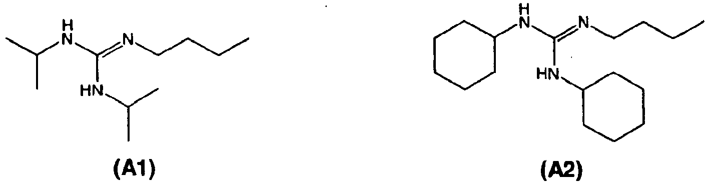

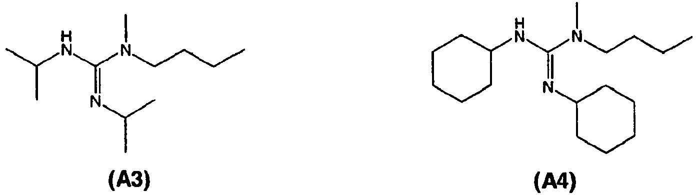

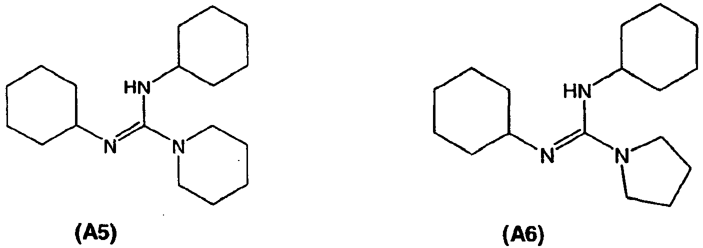

Selon un mode réalisation encore plus préféré, le catalyseur de polycondensation A est un composé organique non silylé choisi parmi le groupe constitué par les composés (A2) (A3) et (A4) décrits ci-dessus.

Les catalyseurs conformes à la présente invention sont non reprotoxiques, contrairement aux catalyseurs à base d'alkylétain. De plus, ils permettent, aussi bien pour des compositions monocomposantes ou bicomposantes, d'obtenir des joints d'étanchéité présentant une résistance améliorée aux fluides utilisés dans les groupes motopropulseurs par rapport à ceux obtenus à partir de composition classiques contenant des catalyseurs au titane ou à base d'alkylétain.

La quantité de catalyseurs de polycondensation A selon l'invention est généralement comprise entre 0,1 et 10 % en poids par rapport au poids total de la composition, de préférence entre 0,1 et 5 %, que ce soit une préparation mono ou bicomposante.

### Description de la base silicone B :

Dans la suite de la présente demande, on décrira de façon conventionnelle les polyorganosiloxanes linéaires, les polyorganosiloxanes de structure branchés et les résines polyorganosiloxanes à l'aide des notations usuelles suivantes, utilisées pour désigner divers motifs siloxyles de formule M, D, T et Q suivantes :

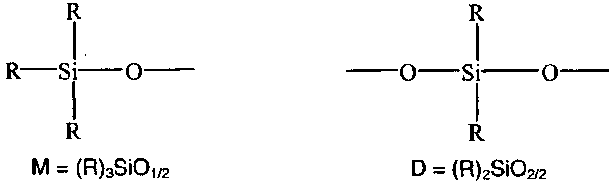

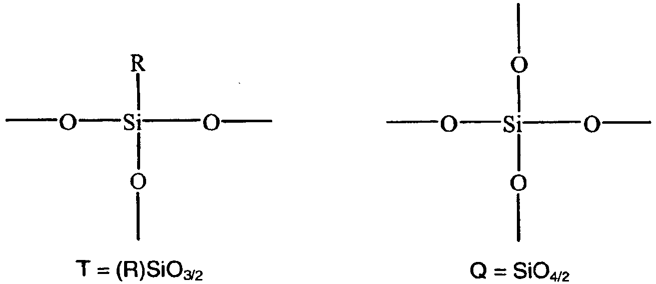

Dans ces formules, R peut représenter divers groupes hydrocarbonés saturés ou insaturés, notamment aromatiques, et éventuellement substitués par des hétéro-atomes, ainsi que des groupes non hydrocarbonés.

Conventionnellement, dans cette notation, les atomes d'oxygène sont partagés entre deux atomes de silicium. Conventionnellement, on indique un groupe R particulier en le citant en exposant après le symbole M, D ou T. Par exemple M^{OH} représente un motif M où un groupe R est une groupe hydroxyle -OH.

Par « substantiellement linéaire », il faut comprendre une huile POS composée de motifs siloxyles D comprenant en outre des motifs siloxyles T et/ou des motifs siloxyles Q, le nombre de motifs siloxyles T et Q étant inférieur ou égal à un pour cent atomes de silicium.

Les bases silicones utilisées dans la présente invention réticulant et durcissant par des réactions de polycondensation sont bien connues. L'expression « huile polyorganosiloxane réticulable par réaction de polycondensation» ne comprend pas les polymères organiques ayant des groupements silicés réticulables par polycondensation tels que ceux décrits par exemple dans la demande de brevet EP-A1-1 985666 à la page 4, lignes 7 à 52.

Les bases silicones selon l'invention sont décrites en détail en particulier dans de nombreux brevets et elles sont disponibles dans le commerce.

Ces bases silicones peuvent être mono-composantes, c'est-à-dire conditionnées en un seul emballage, et stables au stockage en l'absence d'humidité, durcissables en présence d'humidité, en particulier d'humidité apportée par l'air ambiant ou par de l'eau générée au sein de la base lors de son emploi.

En dehors des bases mono-composantes peuvent être utilisées des bases bi-composantes, c'est-à-dire conditionnées en deux emballages, qui durcissent dès le mélange des deux parties. Elles sont conditionnées après incorporation du catalyseur en deux fractions séparées, l'une des fractions pouvant ne renfermer par exemple que le catalyseur selon l'invention ou un mélange avec l'agent réticulant.

Selon un autre mode de réalisation préféré, la composition polyorganosiloxane X selon l'invention telle que décrite ci-dessus est caractérisée en ce qu'elle comprend outre une quantité catalytiquement efficace d'au moins un catalyseur de polycondensation A selon l'invention, et tel que défini dans la présente demande, et une base silicone B comprenant:
- au moins une huile polyorganosiloxane C susceptible de réticuler par polycondensation en un élastomère;
- éventuellement au moins un agent de réticulation D;
- éventuellement au moins un promoteur d'adhérence **E;** et
- éventuellement au moins une charge minérale siliceuse, organique et/ou non siliceuse **F.**

Selon un mode de réalisation particulièrement préféré, la composition polyorganosiloxane **X** réticulable en élastomère par des réactions de polycondensation comprend:
- pour 100 parties en poids d'au moins une huile polyorganosiloxane **C** susceptible de réticuler par polycondensation qui est un polymère réactif α,ω-dihydroxydiorganopolysiloxane dont les radicaux organiques sont des radicaux hydrocarbonés de préférence choisi parmi le groupe constitué par: les alkyles ayant de 1 à 20 atomes de carbone ; les cycloalkyles ayant de 3 à 8 atomes de carbone ; les alcényles ayant de 2 à 8 atomes de carbone et les cycloalcényles ayant de 5 à 8 atomes de carbone ;
- de 0,1 à 60 parties en poids d'au moins un agent de réticulation **D** choisi parmi le groupe constitué par: les polyalcoxysilanes et les produits provenant de l'hydrolyse partielle d'un polyalcoxysilane;
- de 0 à 60 parties en poids d'un promoteur d'adhérence **E** tel que décrit ci-dessous;
- de 0 à 250 parties en poids, de préférence de 5 à 200 parties en poids, d'au moins une charge minérale siliceuse, organique et/ou non siliceuse **F;**
- de 0 à 10 parties en poids d'eau,
- de 0 à 100 parties en poids d'au moins un polymère polyorganosiloxane linéaire non réactif G consistant dans un homopolymère ou copolymère linéaire dont, par molécule, les substituants organiques monovalents, identiques ou différents entre eux, liés aux atomes de silicium sont choisis parmi les radicaux alkyles, cycoalkyles, alcényles, aryles, alkylarylènes et arylalkylènes,
- de 0 à 20 parties en poids d'une base colorante ou d'un agent de coloration **H,**
- de 0 à 70 parties en poids de résines polyorganosiloxanes I, et
- de 0 à 20 parties d'additifs auxiliaires **J** connus de l'homme de métier, tels que des agents plastifiant ; des diluants organiques, des ralentisseurs de réticulation, des huiles minérales, des agents antimicrobien, des additifs de tenue thermique tels que les oxydes de titane, de fer ou de cérium, et
- de 0,1 à 50 parties en poids d'au moins un catalyseur de polycondensation **A** selon l'invention et tel que défini dans la présente demande

Selon un autre mode de réalisation préféré, l'huile polyorganosiloxane **C** présente des extrémités fonctionnalisées de type alcoxy et est préparée in situ par réaction, en présence d'une quantité catalytiquement efficace de lithine, d'un polydiméthylsiloxane branché présentant des groupements hydroxyles liés à un atome de silicium et de formule générale MₓD_{y}Q_{z} (x, y et z étant des nombres entiers) ou d'un diorganopolysiloxane linéaire, comprenant un groupement hydroxyle lié à un atome de silicium à chaque extrémité de chaîne, avec au moins un polyalcoxysilane de formule (II) suivante:

(R⁴)_{c} (R⁵)ₐ Si (OR⁶)_{4-(a+c)} **(II)**

dans laquelle:
- a est égal à 0, 1 ou 2,
- c est égal à 0, 1 ou 2,
- la somme a + c est égale à 0, 1 ou 2,
- R⁴ représente un radical monovalent hydrocarboné saturé ou non en C₁ à C₁₃, substitué ou non, aliphatique, cyclanique ou aromatique, R⁴ pouvant être identique à R⁵,
- R⁵ représente un radical monovalent hydrocarboné saturé ou non en C₁ à C_{13'}, substitué ou non substitué, aliphatique, cyclanique ou aromatique, et pouvant comporter une fonction époxy, amine primaire, secondaire, tertiaire, mercapto, et
- R⁶ représente un radical organique aliphatique ayant de 1 à 8 atomes de carbone choisi notamment entre les radicaux alkyle, les radicaux alkyléther, les radicaux alkylester, les radicaux alkylcétone, les radicaux alkylcyano et les radicaux aralkyle ayant de 7 à 13 atomes de carbone, étant entendu que les groupements alcoxy du silane de formule (II) peuvent avoir chacun une signification différente pour R⁶ ou la même signification.

Selon un autre mode de réalisation préféré, l'huile polyorganosiloxane **C** est de préférence un polymère α,ω-dihydroxypolydiorganosiloxane, de viscosité comprise entre 50 et 5 000 000 mPa.s à 25°C et l'agent de réticulation **D** est de préférence un composé organosilicié portant plus de deux groupes hydrolysables liés aux atomes de silicium par molécule.

L'huile polyorganosiloxane **C** peut également être fonctionnalisée au niveau de ses extrémités par des radicaux hydrolysables obtenu par condensation d'un précurseur porteur de fonctions hydroxyles avec un silane réticulant porteur de radicaux hydrolysables (ou par hydrosilylation de fonctions ≡SiVinyl ou ≡SiH terminales). Des polyorganosiloxane branchés peuvent aussi être envisagés, comprenant éventuellement des groupements alkylsilyl en milieu et/ou bout de chaîne, c'est-à-dire des polyorganosiloxanes présentant des groupements susceptibles de réagir par des réactions de polycondensation en milieu et/ou en bout de chaînes et des groupements alkyles "inter-chaîne" reliant deux chaînes polyorganosiloxanes entre elles.

Les agents de réticulation **D** sont des produits accessibles sur le marché des silicones; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

L'agent de réticulation D présente au moins un groupe hydrolysable tel que:
- acyloxy de formule -O-CO-R'
- alcoxy de formule -O-R'
- amino de formule -NR¹R²
- amido de formule -NR¹COR²
- alcényloxy de formule -O-CR¹=CHR²
- aminoxy de formule -O-NR¹ R²
- cétiminoxy de formule -O-N=CR¹R² ou 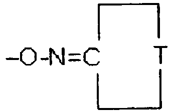
où R' représente un radical alkyle ou aryle ayant de 1 à 15 atomes de carbone, R¹ et R², identiques ou différents, représentent des radicaux alkyle ou aryle contenant de 1 à 8 atomes de carbone et T un radical alkylène contenant de 4 à 8 atomes de carbone. Parmi les radicaux R', R¹ et R², on peut citer tout particulièrement les radicaux: méthyle, éthyle, cyclohexyle et phényle. Parmi les radicaux T on peut citer tout particulièrement ceux de formule: -(CH₂)₄-, -(CH₂)₅- et -(CH₂)₆-.

A titre d'exemple d'alcoxysilanes, on peut citer ceux de formule:

Si(OCH₃)₄

Si(OCH₂CH₃)₄

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂)

(CH₃O)₃Si(CH₂-CH=CH₂)

(CH₃O)₃Si[CH₂-(CH₃)C=CH₂]

(C₂H₅O)₃Si(OCH₃)

Si(OCH₂-CH₂-OCH₃)₄

CH₃Si(OCH₂-CH₂-OCH₃)₃

(CH₂=CH)Si(OCH₂CH₂OCH₃)₃

C₆H₅Si(OCH₃)₃

C₆H₅Si(OCH₂-CH₂-OCH₃)₃.

Les réticulants cétiminoxysilane sont bien connues depuis longtemps. Ils sont par exemple décrits dans les brevets français FR-A-1 314 649, FR-A-1 371 250, américains US-A-3 678 003 et US-A-3 986 999, dans le brevet britannique GB-A-1 468 467, dans le brevet belge BE-A-901 479 et dans le brevet européen EP-A-157 580.

A titre d'exemple de cétiminoxysilanes, on peut citer ceux de formule: CH₃Si[-O-N=C(CH₃)₂]₃,

CH₃Si[-O-N=C(CH₃)C₂H₅]₃,

CH₂=CHSi[-O-N=C(CH₃)C₂H₅]₃,

C₆H₅Si[-O-N=C(CH₃)₂]₃,

CH₃Si[-O-N =C(C₂H₅)(CH₂)₃CH₃]₃,

(CH₃)₂C = N-O-] Si[-O-N=C(CH₃)C₂H₅]₃,

CH₃Si[-O-N =C(CH₃CH(C₂H₅)(CH₂)₃CH₃]₃,

CH₃Si[-O-N =C(CH₃CH(C₂H₅)(CH₂)₃CH₃]₃,

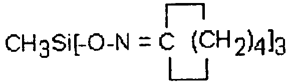

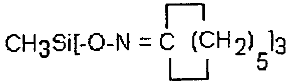

Les réticulants acyloxysilanes sont bien connus depuis longtemps. Ils sont décrits notamment dans les brevets US-A-3 077 465, US-A-3 382 205, US-A-3 701 753, US-A-3 957 714, US-A-4 115 356, US-A-4 273 698, FR-A-2 429 811 et FR-A-2 459 820.

A titre d'exemple d'acyloxysilanes, on peut citer ceux de formule: CH₃Si(OCOCH₃)₃,

C₂H₅Si(OCOCH₃)₃

CH₂=CHSi(OCOCH₃)₃

C₆H₅Si(OCOCH₃)₃,

CH₃Si[OCOCH(C₂H₅)-(CH₂)₃-CH₃]

CF₃CH₂CH₂Si(OCOC₆H₅)₃

CH₃Si(OCOCH₃)₂[OCOH(C₂H₅)-(CH₂)₃-CH₃]

CH₃COOSi[OCOCH(C₂H₅)-(CH₂)₃-CH₃]

**A** titre d'autres exemples d'agent de réticulation **D** on peut citer :
- les silanes et les produits d'hydrolyse partielle de ce silane de formule générale suivante:

   R¹ₖ Si(OR²)₍₄₋ₖ₎

   dans laquelle:
- les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆, et
- le symbole R¹ représente un groupe hydrocarboné aliphatique saturé ou insaturé, linéaire ou ramifié, un groupe carbocyclique, saturé ou insaturé et/ou aromatique, monocyclique ou polycyclique et k est égal à 0, 1 ou 2 ; et

Parmi les agents de réticulation **D,** on préfère plus particulièrement les alcoxysilanes, les cétiminoxysilanes, les silicates d'alkyle et les polysilicates d'alkyle, dans lesquels les radicaux organiques sont des radicaux alkylés ayant de 1 à 4 atomes de carbone.

Comme autres exemples d'agent de réticulation **D,** on peut citer le polysilicate d'éthyle, ou le polysilicate de n-propyle.

On utilise généralement de 0,1 à 60 parties en poids d'agent de réticulation **D** pour 100 parties en poids de polyorganosiloxane **C** susceptible de réticuler par polycondensation en un élastomère.

Ainsi la composition selon l'invention peut comprendre au moins un promoteur d'adhérence **E** tel que par exemple les composés organosiliciques portant à la fois:
(1) un ou des groupes hydrolysables liés à l'atome de silicium, et
(2) un ou des groupes organiques substitués par des radicaux comprenant un ou plusieurs atome(s) d'azote, hétéroatomes S ou O) des groupements mercaptan, urée ou isocyanurate) ou choisis dans le groupe des radicaux (méth)acrylate, époxy, et alcényle, et plus préférentiellement encore dans le groupe constitué par les composés suivants pris seul ou en mélange:
   vinyltriméthoxysilane (VTMO),
   3-glycidoxypropyl-triméthoxysilane (GLYMO),
   méthacryloxypropyltriméthoxysilane (MEMO),

      [H₂N(CH₂)₃]Si(OCH₂CH₂CH₃)₃,

      [H₂N(CH₂)₃]Si(OCH₃)₃

      [H₂N(CH₂)₃]Si(OC₂H₅)₃

      [H₂N(CH₂)₄]Si(OCH₃)₃

      [H₂NCH₂CH(CH₃)CH₂CH₂]SiCH₃(OCH₃)₂

      [H₂NCH₂]Si(OCH₃)₃

      [n-C₄H₉-HN-CH₂]Si(OCH₃)₃

      [H₂N(CH₂)₂NH(CH₂)₃]Si(OCH₃)₃

      [H₂N(CH₂)₂NH(CH₂)₃]Si(OCH2CH₂OCH₃)₃

      [CH₃NH(CH₂)₂NH(CH₂)₃]Si(OCH₃)₃

      [H(NHCH₂CH₂)₂NH(CH₂)₃]Si(OCH)₃

      HS(CH₂)₃Si(OCH₃)₃

      NH2CONH2(CH₂)₃Si(OCH₃)₃ 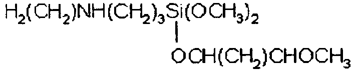 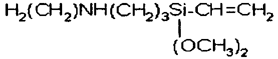
   ou des oligomères polyorganosiloxaniques contenant de tels groupes organiques à une teneur supérieure à 20%.

A ces bases monocomposantes peuvent être ajoutés des promoteurs d'adhérence E choisis par exemple parmi les composés organosiliciés portant à la fois, d'une part, des groupes organiques substitués par des radicaux choisis dans le groupe des radicaux amino, uréido, isocyanate, époxy, alkènyle, isocyanurate, hydentoile, guanidino et mercaptoester et, d'autre part des groupes hydrolysables, en général des groupes alcoxy liés aux atomes de silicium. Des exemples de tels agents d'adhérence sont décrits dans les brevets américains US 3 517 001, US 4 115 356, US 4 180 642, US 4 273 698, US 4 356 116 et dans les brevets européens EP 31 996 et EP 74 001.

Pour les bases mono- et bi-composantes, on utilise comme charges minérales F des produits très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium éventuellement traité en surface par un acide organique ou par un ester d'un acide organique, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g. Ces charges peuvent avoir été traitées en surface

L'introduction des charges a pour but de conférer de bonnes caractéristiques mécaniques et rhéologiques aux élastomères découlant du durcissement des compositions conformes à l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple on peut utiliser les cocktails d'oxydes décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

D'autres agents auxiliaires et additifs usuels peuvent être incorporés à la composition selon l'invention; ceux-ci sont choisis en fonction des applications dans lesquelles sont utilisées lesdites compositions.

La base silicone utilisée pour réaliser la composition selon l'invention peut comprendre:
- 100 parties d'huile polyorganosiloxane C susceptible de réticuler par polycondensation en un élastomère ;
- 0 à 20 parties d'un agent de réticulation **D;**
- 0 à 20 parties d'un promoteur d'adhérence **E;** et
- 0 à 50 parties de charge **F.**

Outre les constituants principaux, des polymères polyorganosiloxanes linéaires non réactifs G peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif **G** sont bien connus; ils comprennent plus spécialement: des polymères α,ω-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties, de préférence de 5 à 20 parties, pour 100 parties d'huile polyorganosiloxane C susceptible de réticuler par polycondensation.

Les compositions selon l'invention peuvent en outre avantageusement comprendre au moins une résine silicone H. Ces résines silicones sont des polymères organopolysiloxanes ramifiés bien connus et disponibles dans le commerce. Elles présentent, par molécule, au moins deux motifs différents choisis parmi ceux de formule R"'₃SiO_{1/2} (motif M), R"'₂SiO_{2/2} (motif D), R"'SiO_{3/2} (motif T) et SiO_{4/2} (motif Q). Les radicaux R"' sont identiques ou différents et sont choisis parmi les radicaux alkyles linéaires ou ramifiés présentent de 1 à 10 atomes de carbone, les radicaux vinyle, phényle, trifluoro-3,3,3 propyle. De préférence, les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle.

Comme exemple de résines, on peut citer les résines MQ, les résines MDQ, les résines DT et les résines MDT.

Pour fabriquer les compositions conformes à l'invention, il est nécessaire dans le cas des compositions monocomposantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités. Il est possible de mélanger tout d'abord les huiles organopolysiloxanes **C** et les charges **F** et d'ajouter ensuite à l'empâtage obtenu les réticulants **D,** les composés **E** et le catalyseur selon l'invention. Il est également possible de mélanger les huiles **C,** les réticulants **D,** les composés **E** et les charges **F** et d'ajouter ultérieurement le catalyseur selon l'invention. Au cours de ces opérations, les mélanges peuvent être chauffés à une température comprise dans l'intervalle 50-180°C sous la pression atmosphérique ou sous une pression réduite afin de favoriser le départ de matières volatiles. Selon une variante, des huiles silicones à motifs alcoxy sont préparées in situ par une réaction de fonctionnalisation d'une huile α,ω-dihydroxypolydiméthylsiloxane par réaction avec un silane ou un polyalcoxysilane en présence d'une quantité catalytiquement efficace de lithine (procédé décrit dans la demande FR-2638752.

Les compositions monocomposantes, conformes à l'invention, utilisées telles quelles, c'est-à-dire non diluées, ou sous forme de dispersions dans des diluants, sont stables au stockage en l'absence d'eau et durcissent dès les basses températures (après départ des solvants dans le cas des dispersions) en présence d'eau pour former des élastomères.

Après le dépôt des compositions telles quelles, sur des substrats solides, en atmosphère humide, on constate qu'un processus de durcissement en élastomère se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

La fabrication des compositions bicomposantes conformes à l'invention s'effectue également par mélange des divers constituants dans des appareils appropriés. Pour obtenir des compositions homogènes, il est préférable de mélanger tout d'abord les polymères **A** avec les charges **C ;** l'ensemble peut être chauffé au moins 30 minutes à une température supérieure à 80°C, de manière à parfaire le mouillage des charges par les huiles. Au mélange obtenu, porté de préférence à une température inférieure à 80°C, par exemple de l'ordre de la température ambiante, peuvent être ajoutés les autres constituants, c'est-à-dire les agents réticulants, le catalyseur et éventuellement des additifs et adjuvants divers et même de l'eau.

Selon un autre mode de réalisation particulièrement préféré, la composition polyorganosiloxane **X** réticulable en élastomère par des réactions de polycondensation est préparée à partie d'un système bicomposant qui se présente en deux parties **P1** et **P2** distinctes destinées à être mélangées pour former ladite composition **X,** avec l'une de ces parties comprenant le catalyseur de polycondensation **A** selon l'invention et tel que décrit dans la présente demande et l'agent de réticulation **D** alors que l'autre partie est exempte des espèces précitées et comprend:
- pour 100 parties en poids de l'huile (ou des huiles) polyorganosiloxane(s) **C** susceptible(s) de réticuler par polycondensation en un élastomère, et
- de 0.001 à 10 partie(s) en poids d'eau.

Selon un autre mode de réalisation particulièrement préféré, la composition polyorganosiloxane X réticulable en élastomère par des réactions de polycondensation est préparée à partie d'un système monocomposant stable au stockage en l'absence d'humidité et réticulant, en présence d'eau, en élastomère, comprend:
- au moins une huile polyorganosiloxane **C** linéaire réticulable présentant des extrémités fonctionnalisées de type alcoxy, oxime, acyle et /ou énoxy, de préférence alcoxy,
- au moins un agent de réticulation **D,**
- au moins une charge **F,** et
- au moins un catalyseur de la réaction de polycondensation qui est le catalyseur de polycondensation **A** selon l'invention et tel que décrit dans la présente demande.

Des bases monocomposantes sont décrites en détail par exemple dans les brevets EP 141 685, EP 147 323, EP 102 268, EP 21 859, FR 2 121 289 et FR 2 121 631, cités en référence.

Des bases bicomposantes sont décrites en détail par exemple dans les brevets EP 118 325, EP 117 772, EP 10 478, EP 50 358, EP 184 966, US 3 801 572 et US 3 888 815, cités comme référence.

Selon un mode de réalisation particulièrement avantageux de l'invention, la composition polyorganosiloxane **X** réticulable en élastomère par des réactions de polycondensation comprend une quantité suffisante d'au moins un agent thixotropant **K** afin de présenter des propriétés thixotropes.

On entend au sens de l'invention par composition silicone thixotrope, une composition présentant une thixotropie, définie comme étant un comportement rhéologique d'une matière soumise à un cisaillement amenant à une déstructuration progressive de ladite matière. La thixotropie est ainsi un phénomène réversible qui permet d'obtenir une composition sous forme de gel au repos et qui se liquéfie lorsqu'elle est soumise à une agitation ou un cisaillement. Un matériau thixotrope voit ainsi sa viscosité diminuer lorsque le cisaillement qui lui est appliqué augmente, et qui revient à des conditions initiales de viscosité lorsque l'on cesse d'appliquer un cisaillement, au bout d'un certain temps (voir l'ouvrage Rheology Handbook : "A practical Guide to Rheological Additives", Rheox, Inc., 1998).

L'addition d'un agent thixotropant **K** permet de contrôler la rhéologie des compositions polyorganosiloxane **X** réticulable en élastomère et, en particulier, permet de conférer à ces dernières un comportement viscoélastique non coulant.

Les agents thixotropants sont biens connus du domaine. On peut citer à ce titre les différents agents épaississants organiques et inorganiques utilisés couramment dans les compositions silicones.

L'agent thixotropant **K** selon l'invention est préférentiellement choisi dans le groupe constitué par:
- les épaississants inorganiques, l'acide borique et les borates, les titanates, les aluminates, les zirconates ;
- les composés portant des groupements hydroxyles;
- les composés à base de polyéthylène et/ou polypropylène;
- les composés comprenant des fonctions amines cycliques ;
- les composés de type polyéther ou comprenant des groupements polyéther, et
- les résines fluorées, de préférence à base de polyfluoroéthylène (PFE) et plus préférentiellement encore à base de polytétrafluoroéthylène (PTFE ou téflon®).

Comme composés portant des groupements hydroxyles, on peut citer notamment les silicones hydrophiles portant des groupements hydroxyles, tels que les polydiméthylsiloxanes ou polyméthylphenylsiloxanes ou polydiphenylsiloxanes ou leurs copolymères à terminaisons diméthylhydroxy; ou les résines silicones de type "MDT" hydroxylées.

Comme composés à base de polyéthylène et/ou polypropylène, on peut citer les cires cristallines de polyethylène ou de polypropylène portant éventuellement des groupements fluorés (Crayvallac^{®}).

Au sens de l'invention, on entend par "résine fluorée" tout polymère fluoré contenant des liaisons C-F (voir par exemple l'ouvrage "Encyclopedia of Chemical Technology" -4ème édition, 1994, Vol.11 -p. 621-721) tels que par exemple:
- un polyfluorure de vinyle,
- un polyfluorure de vinylidène,
- un polytétrafluoroéthylène (PTFE),
- un polymonochlorotrifluoroéthylène,
- un polyfluoropolyéthers,
- un copolymère d'éthylène et de tétrafluoroéthylène,
- un copolymère de tétrafluoroéthylène et de perfluorovinyléther, et
- un copolymère d'éthylèneperfluoro et de propylèneperfluoro.

Un autre objet de l'invention consiste en l'utilisation de la composition polyorganosiloxane **X** réticulable en élastomère par des réactions de polycondensation et telle que définie ci-dessus pour préparer des joints silicones d'étanchéité ayant une bonne résistance au vieillissement dans des fluides utilisés dans un groupe motopropulseur.

D'autres avantages et caractéristiques de la présente invention apparaîtront à la lecture des exemples suivants donnés à titre illustratif nullement limitatif.

### EXEMPLES

### I) Préparation des catalyseurs selon l'invention

### a) 1-butyl-2,3-diisopropylguanidine (A1):

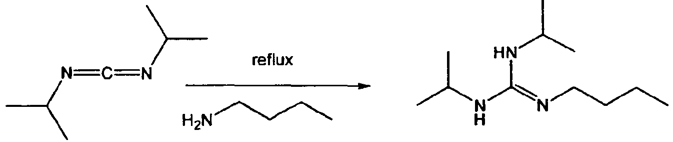

Un mélange de 33 g de N-butylamine (0,45 mol) et de 19 g de diisopropylcarbodiimide (0,15 mol) est chauffé à reflux 3h30. L'analyse par CPG montre alors une conversion supérieure à 99.5 % de la diisopropylcarbodiimide. Le mélange final incolore est concentré à 60°C sous 20 mbar pendant 2 h pour donner 29 g d'un liquide incolore et pratiquement inodore de faible viscosité, correspondant à la guanidine attendue (rendement 96.7 %).
RMN ¹H/CDCl₃ (ppm): 0.93 (3 H, t), 1.14 (12 H, d), 1.37 (2 H, sex), 1.52 (2 H, quint), 3.01 (2 H, t), 3.57 (2 H, m).

### b) 1-butyl-2,3-diisopropyl)-1-méthylguanidine (A3):

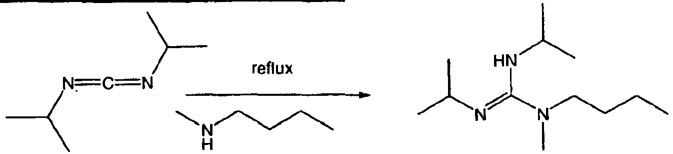

Un mélange de 32.68 g de N-butyl-N-méthylamine (0,375 mol) et de 23.66 g de diisopropylcarbodiimide (0,1875 mol) est chauffé à reflux 3h. L'analyse par CPG montre alors une conversion supérieure à 99.5 % de la diisopropylcarbodiimide. Le mélange final incolore est concentré à 60°C sous 5 mbar pendant 2 h pour donner 40 g d'un liquide incolore et pratiquement inodore de faible viscosité, correspondant à la guanidine attendue (rendement 100 %).
RMN ¹H/CDCl₃ (ppm): 0.88 (3 H, t), 1.06 (12 H, d), 1.26 (2 H, sex), 1.46 (2 H, quint), 2.67 (3 H, s), 3.05 (2 H, t), 3.35 (2 H, m).

### c) 1-butyl-2,3-dicyclohexylguanidine (A2) RN-CAS = 60006-40-8

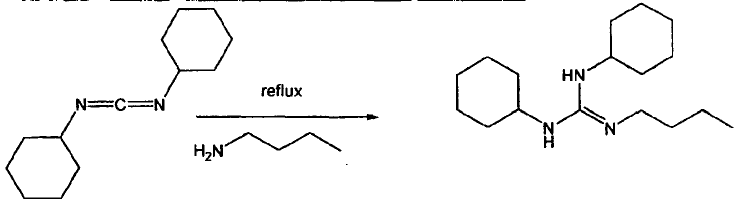

Un mélange de 15.69 g de N-butylamine (0,214 mol) et de 22.13 g de dicyclohexylcarbodiimide (0,107 mol) est chauffé à reflux 2h. L'analyse par CPG montre alors une conversion supérieure à 99.6 % de la dicyclohexylcarbodiimide. Le mélange final incolore est concentré à 60°C sous 1 mbar pendant 2 h pour donner 29.7 g d'un liquide incolore et pratiquement inodore moyennement visqueux, correspondant à la guanidine attendue (rendement 99 %).

### d) 1-butyl-2,3-dicyclohexyl-1-méthylguanidine (A4):

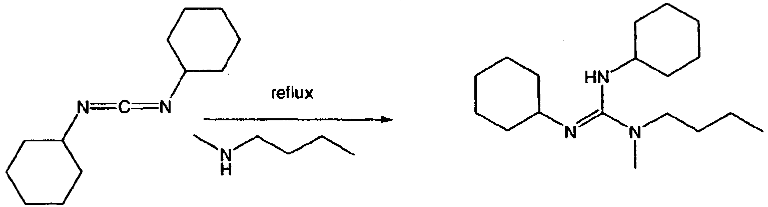

Un mélange de 17.78 g de N-butyl-N-méthylamine (0,204 mol) et de 21.05 g de dicyclohexylcarbodiimide (0,102 mol) est chauffé à reflux 3h. L'analyse par CPG montre alors une conversion supérieure à 99.5 % de la dicyclohexylcarbodiimide. Le mélange final incolore est concentré à 60°C sous 1 mbar pendant 2 h pour donner 29.9 g d'un liquide incolore et pratiquement inodore moyennement visqueux, correspondant à la guanidine attendue (rendement 99.7 %).
RMN ¹H/CDCl₃ (ppm): 0.89 (3 H, t), 1-1.4 (10 H, m), 1.47 (2 H, quint), 1.5-2 (12 H, plusieurs m), 2.67 (3 H, s), 2.90 (1 H, m), 2.97 (1 H, m), 3.06 (2 H, t).

### e) 1.2-Dicyclohexyl-3-pipéridylguanidine (A5) RN-CAS 60006-25-9 :

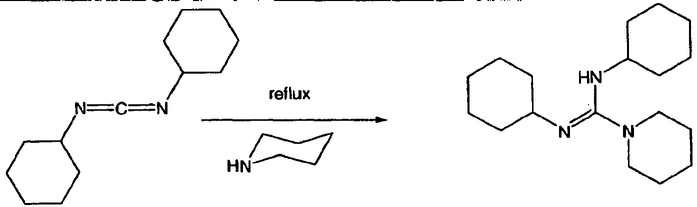

Un mélange de 11.69 g de pipéridine (0,137 mol) et de 14.16 g de dicyclohexylcarbodiimide (0,0686 mol) est chauffé à reflux 3h30. L'analyse par CPG montre alors une conversion supérieure à 99.7 % de la dicyclohexylcarbodiimide. Le mélange final incolore est concentré à 60°C sous 1 mbar pendant 2 h pour donner 19.9 g d'un liquide incolore et pratiquement inodore trés visqueux, correspondant à la guanidine attendue (rendement 99.5 %).

### f) 1.2-Dicyclohexyl-3-pyrrolidylguanidine (A6) RN-CAS 60006-28-2 :

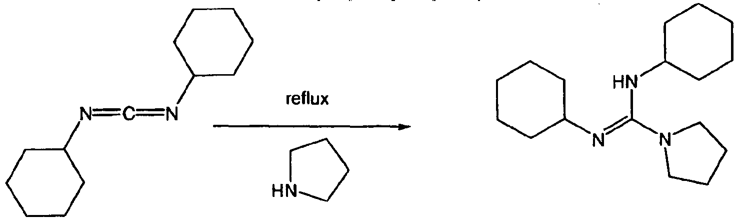

Un mélange de 19.2 g de pyrrolidine (0,27 mol) et de 18.6 g de dicyclohexylcarbodiimide (0,09 mol) est chauffé à reflux 4h. L'analyse par CPG montre alors une conversion supérieure à 99.8 % de la dicyclohexylcarbodiimide. Le mélange final incolore est concentré à 60°C sous 1 mbar pendant 1 h pour donner 24.9 g d'un liquide incolore et pratiquement inodore moyennement visqueux, correspondant à la guanidine attendue (rendement 99.6 %).

### II) Préparation de compositions mono-comoosantes - Test en empâtage - réticulant vinyltriméthoxysilane

L'empâtage utilisé est préparé comme suit : à un mélange de 3464 g d'une huile α,ω-dihydroxylée de viscosité de 20000 centipoises contenant 0.066% d'OH, et de 120 g de vinyltriméthoxysilane sous agitation, est ajouté 16 g d'une solution de lithine à 2 % en poids dans le méthanol, puis après 5 min, 400 g de silice de pyrogénation AE55 sont ajoutés. Le mélange est dévolatilisé sous vide puis stocké à l'abri de l'humidité.

Pour chaque test, le catalyseur testé est mélangé à 50 g de cet empâtage, puis le potentiel catalytique est évalué de 3 façons :
- le temps de formation de peau (TFP), temps au bout duquel on observe une réticulation en surface, sur film de 2 mm,
- la persistance d'un toucher collant à 48h,
- la dureté (en Shore A) d'un cordon de 6 mm d'épaisseur dans des conditions régulées (23°C et 50% d'humidité relative) et sur des temps croissants (2, 3, 4, 7 et 14 jours), ainsi que après 7 jours (7J) à température ambiante (TA) suivi de 7 jours à 100°C. Dans les tableaux de résultats, le symbole « > » correspond aux valeurs de dureté mesurées sur la partie supérieure du cordon et le symbole « < » correspond aux valeurs de dureté mesurées sur la partie inférieure du cordon moins exposée à l'air ambiant que la partie supérieure.

Différents catalyseurs selon l'invention ont été testés. A titre comparatif, comme précédemment, ont été également testés:
- un catalyseur à base d'étain: le dilaurate de dibutylétain (DLBDE), et
- la 1,1,3,3-tétraméthylguanidine (TMG) qui est décrite dans la demande internationale WO 2004/020525. Les résultats sont indiqués dans le Tableau I ci-dessous:

**Tableau 1**

| **Référence** | **Structure** | **mol/Sn** | **% poids** | **TFP baton** | **Toucher collant** | **Dureté Shore A sur 6mm** | | | | | | | | | | | |
|---|---|---|---|---|---|---|---|---|---|---|---|---|---|---|---|---|---|
| | | | | | **à** | **2J** | | **3J** | | **4J** | | **7J** | | **14J** | | **7J TA + 7J 100°C** | |
| | | | | **min** | **48h** | **>** | **<** | **>** | **<** | **>** | **<** | **>** | **<** | **>** | **<** | **>** | **<** |
| **Comparatif (DLDBE)** | | 1 | 0,88 | 10 | non | 34 | 26 | 35 | 30 | 35 | 30 | 35 | 29 | 35 | 30 | 35 | 28 |
| **Comparatif (TMG)** | 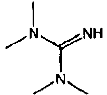 | 4 | 0,64 | 2 | oui | 2 | 1 | 2 | 1 | / | | 4 | 3 | 2 | 1 | 1 | 1 |
| **Invention (A1)** | 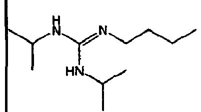 | 3 | 0,84 | 1 | non | 36 | 26 | 36 | 28 | 37 | 28 | 38 | 28 | 38 | 30 | 34 | 27 |
| | | 1,5 | 0,42 | 2 | non | 35 | 22 | 36 | 26 | 36 | 27 | 37 | 28 | 39 | 28 | 36 | 26 |
| | | 0,75 | 0,21 | 2 | oui | 30 | 4 | 32 | 6 | 33 | 9 | 35 | 14 | 37 | 21 | 35 | 21 |
| **Invention (A2)** | 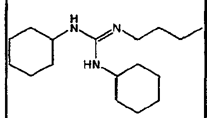 | 1,5 | 0,59 | 1 | non | 34 | 27 | 35 | 28 | 35 | 30 | 36 | 30 | 37 | 31 | 31 | 25 |
| **Invention (A3)** | 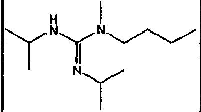 | 3 | 0,9 | 3 | non | 35 | 27 | 36 | 29 | 36 | 29 | 35 | 29 | 37 | 31 | 37 | 30 |
| | | 1,5 | 0,46 | 5 | non | 35 | 21 | 37 | 28 | 37 | 30 | 37 | 30 | 39 | 31 | 37 | 31 |
| | | 0,75 | 0,23 | 6 | oui | 31 | 12 | 33 | 21 | 35 | 24 | 36 | 27 | 39 | 30 | 37 | 27 |
| | | 0,375 | 0,11 | 12 | oui | 22 | 4 | 26 | 6 | 28 | 10 | 28 | 13 | 32 | 23 | 31 | 21 |
| **Invention (A4)** | 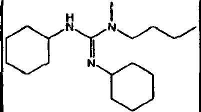 | 0,75 | 0,31 | 5 | non | 35 | 24 | 36 | 28 | 37 | 29 | 37 | 29 | 37 | 30 | 37 | 30 |
| | | 0,375 | 0,15 | 7 | non | 30 | 13 | 32 | 19 | 33 | 23 | 34 | 26 | 35 | 28 | 35 | 29 |

La 1,1,3,3-tétraméthylguanidine (TMG) ne permet pas la réticulation de l'huile silicone, pourtant à des concentrations molaires bien supérieures aux guanidines selon l'invention **(A1)** à **(A4).** Les guanidines 1,2,3-trisubstituées **(A1)** et **(A2)** conduisent à des temps de formation de peau très courts et à des élastomères. Les guanidines 1,2,3,3-tétrasubstituées **(A3)** et **(A4)** permettent non seulement en adaptant les teneurs jusqu'à des valeurs très faibles de moduler les durées des temps de formation de peau tout en obtenant des élastomères très stables thermiquement et de niveaux de réticulation légèrement plus élevés qu'avec le catalyseur à l'étain (DLDBE). Ces résultats montrent que les catalyseurs selon l'invention **(A1)** à **(A4),** non toxiques, conduisent à une catalyse plus efficace que les catalyseurs à base d'étain (DLDBE) et que la tétraméthylguanidine (TMG). Les catalyseurs selon l'invention peuvent donc avantageusement remplacer les catalyseurs existants.

### XI) Tests 1 Tenue aux huiles

Un empâtage de test utilisé est préparé comme suit : à un mélange de 3464 g d'une huile polydiméthylsiloxane α,ω-dihydroxylée de viscosité de 20000 centipoises contenant 0.066% d'OH, et de 120 g de vinyltriméthoxysilane sous agitation est ajouté 16 g d'une solution de lithine à 2 % en poids dans le méthanol, puis après 5 min 400 g de silice de pyrogénation AE55 sont ajoutés. Le catalyseur à tester est ensuite ajouté à la teneur de x % en poids, puis le mélange est dévolatilisé sous vide avant encartouchage.

Des joints sous forme de films de 2 mm d'épaisseur sont préparés à partir des formulations à tester et sont préalablement mis à réticuler en salle conditionnée à 23°C et à 50 % d'hygrométrie pendant 14 jours. Dans chaque cas, 3 éprouvettes de forme carrée découpées dans les joints et dont la dureté Shore A a été préalablement mesurée, sont introduites dans un flacon en verre de 150 ml rempli d'huile 5W30 diesel (distribuée par la société Total). Après chauffage à 150°C pendant 3 jours et retour à la température ambiante, les éprouvettes sont essuyées à l'aide d'un papier absorbant et la dureté Shore A est mesurée à l'aide d'un duromètre Zwick. Les 3 guanidines suivantes ont été testées :
Les 3 guanidines suivantes ont été testées : 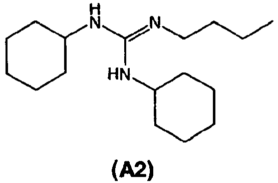 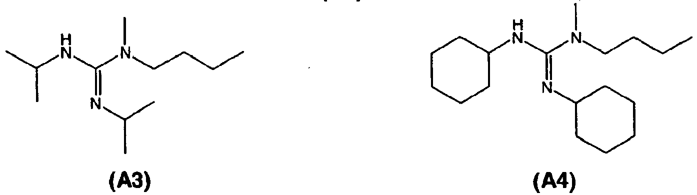 ainsi que les catalyseurs de condensation « classiques » :
   - DLDBE : dibutylétain dilaurate de dibutylétain
   - Silane aminé : N-aminoéthyl-aminopropylméthyldiméthoxysilane
   - PITA SM : bis(éthyle acétylacétato) diisopropoxyde de titane
   - TBOT : Tétra(butoxyde) de titane

Les résultats obtenus sont consignés dans le Tableau II suivant :

**Tableau II**

| | Invention Catalyseur **(A3)** 0,3 % en poids | Invention Catalyseur **(A4)** 0,3 % en poids | Invention Catalyseur **(A2)** 0,3 % en poids | Comparatif DLDBE (0,05%)-silane aminé 0,52% | Comparatif PITA SM 1 % en poids | Comparat TBOT 1 % en poids |
|---|---|---|---|---|---|---|
| DSA 3 x 2 mm avant immersion dans l'huile | 40 | 41 | 45 | 21 | 30 | 28 |
| DSA 3 x 2 mm après immersion dans l'huile | 27 | 30 | 31 | 0 | 8 | 3 |
| **DSA résiduelle** (%) | **67** | **73** | **69** | **0** | **27** | **17** |

| | | | | | | |
|---|---|---|---|---|---|---|
| DSA résiduelle (%) = 100*DSA après traitement dans l'huile/DSA initiale. | | | | | | |

II apparait clairement que la tenue aux huiles vue à travers la DSA résiduelle (%) après une immersion prolongée dans une huile moteur est particulièrement excellente pour les 3 joints obtenus avec les compositions selon l'invention comprenant les catalyseurs **(A2), (A3)** et **(A4).**

### IV) Test 2 de tenue aux huiles

IV-1) On prépare les formulations suivant un mode opératoire décrit dans les paragraphes a) à g) suivants:

### a) Formulation 1 avec catalyseur (A3) - Invention

Dans un mélangeur équipé d'un mobile d'agitation de type « papillon » sont introduits 1035 g d'huile polydiméthylsiloxane α,ω-dihydroxylée de viscosité 20000 mPa.s à 23°C et 36 g de vinyltriméthoxysilane (VTMO). Ce mélange est homogénéïsé par rotation du « papillon » à 200t/mn pendant 2 minutes. Ensuite 4,8 g d'un catalyseur de fonctionnalisation à base de lithine monohydratée dissoute dans le méthanol sont alors ajoutés en 30 secondes. Suit une phase d'homogénéisation de 4 minutes à 400 t/mn. Puis 120g de silice traitée D4 sont incorporées à vitesse d'agitation modérée de 160t/mn et dispersés pendant 4 minute supplémentaires à 400 t/mn. Le milieu subit alors une phase de dégazage de 8 minutes sous vide partiel de 50 mbar et sous agitation à 130 t/mn puis sont ajoutés sous azote 3,6g de di(isopropyl)méthylbutylguanidine **(A3)** et dispersés à 400 t/mn pendant 5 minutes. Le milieu subit une deuxième phase de dégazage de 3 minutes sous 40 mbar et sous agitation à 130 t/mn. Enfin le mélange est transféré en cartouches plastiques fermées.

### b) Formulation 2 avec catalyseur (A4) - Invention

On suit la même procédure que celle décrite pour la Formulation 1 mais 3,6g de di(cyclohexyl)méthylbutylguanidine **(A4)** sont ajoutés au lieu de la di(isopropyl)méthylbutylguanidine **(A3).**

### c) Formulation 3 avec catalyseur (A4) - Invention

Dans un mélangeur équipé d'un mobile d'agitation de type « papillon » sont introduits 908 g d'huile polydiméthylsiloxane (α,ω-dihydroxylée de viscosité 20000 mPa.s à 23°C et 24 g de vinyltriméthoxysilane (VTMO). Ce mélange est homogénéisé par rotation du « papillon » à 200t/mn pendant 2 minutes. Ensuite 4,8 g d'un catalyseur de fonctionnalisation à base de lithine monohydratée dissoute dans le méthanol sont alors ajoutés en 30 secondes. Suit une phase d'homogénéïsation de 4 minutes à 400 t/mn. Puis, 108g de silice traitée par de l'octaméthylcyclotétrasiloxane (D4) sont incorporées à vitesse d'agitation modérée de 160t/mn et dispersés pendant 4 minute supplémentaires à 400 t/mn. De la même façon sont chargés 144g de terre de diatomée, Célite350. Le milieu subit alors une phase de dégazage de 8 minutes sous vide partiel de 50 mbar et sous agitation à 130 t/mn puis 10,8 g de di(cyclohexyl)méthylbutylguanidine **(A4)** sont ensuite ajoutés sous azote et dispersés à 400 t/mn pendant 5 minutes. Le milieu subit une deuxième phase de dégazage de 3 minutes sous 40 mbar et sous agitation à 130 t/mn. Enfin le mélange est transféré en cartouches plastiques fermées.

### d) Formulation 4 avec catalyseur (A4) - Invention

Dans un mélangeur équipé d'un mobile d'agitation de type « papillon » sont introduits 768 g d'huile polydiméthylsiloxane α,ω-dihydroxylée de viscosité 20000 mPa.s à 23°C et 24 g de vinyltriméthoxysilane (VTMO). Ce mélange est homogénéïsé par rotation du « papillon » à 200t/mn pendant 2 minutes. Ensuite 4,8 g d'un catalyseur de fonctionnalisation à base de lithine monohydratée dissoute dans le méthanol sont alors ajoutés en 30 secondes. Suit une phase d'homogénéïsation de 4 minutes à 400 t/mn. Puis, 36g de silice traitée D4 sont incorporées à vitesse d'agitation modérée de 160t/mn et dispersés pendant 4 minute supplémentaires à 400 t/mn. De la même façon sont chargés 360g de carbonate Winnofil de Solvay. Le milieu subit alors une phase de dégazage de 8 minutes sous vide partiel de 50 mbar et sous agitation à 130 t/mn puis 7,2 g de di(cyclohexyl)méthylbutylguanidine **(A4)** sont ensuite ajoutés sous azote et dispersés à 400 t/mn pendant 5 minutes. Le milieu subit une deuxième phase de dégazage de 3 minutes sous 40 mbar et sous agitation à 130 t/mn. Enfin le mélange est transféré en cartouches plastiques fermées.

### e) Formulation 4bis avec catalyseur (A4) -Invention (silicone branché)

Dans un mélangeur équipé d'un mobile d'agitation de type « papillon » sont introduits 696 g d'huile polydiméthylsiloxane branché, de formule générale MxDyQz, contenant 0,06 % en poids de groupements hydoxyle OH et 36 g de vinyltriméthoxysilane (VTMO). Ce mélange est homogénéïsé par rotation du « papillon » à 200t/mn pendant 2 minutes. Ensuite 4,8 g d'un catalyseur de fonctionnalisation à base de lithine monohydratée dissoute dans le méthanol sont alors ajoutés en 30 secondes. Suit une phase d'homogénéïsation de 4 minutes à 400 t/mn. Puis, 36g de silice traitée D4 sont incorporées à vitesse d'agitation modérée de 160t/mn et dispersés pendant 4 minute supplémentaires à 400 t/mn. De la même façon sont chargés 420g de carbonate Winnofil de Solvay. Le milieu subit alors une phase de dégazage de 8 minutes sous vide partiel de 50 mbar et sous agitation à 130 t/mn puis 7,2 g de di(cyclohexyl)méthylbutylguanidine **(A4)** sont ensuite ajoutés sous azote et dispersés à 400 t/mn pendant 5 minutes. Le milieu subit une deuxième phase de dégazage de 3 minutes sous 40 mbar et sous agitation à 130 t/mn. Enfin le mélange est transféré en cartouches plastiques fermées.

### f) Formulation 5 Catalyseur PITA SM - Comparatif.

Dans un mélangeur équipé d'un mobile d'agitation de type « papillon » sont introduits 763 g d'huile polydiméthylsiloxane α,ω-dihydroxylée de viscosité 20000 mPa.s à 23°C, 120 g d'huile polydiméthylsiloxane α,ω-triméthylsilylée de viscosité 100 mPa.s à 23°C, 12g d'une base colorante noire contenant du noir de carbone et 24 g de vinyltriméthoxysilane (VTMO). Ce mélange est homogénéïsé par rotation du « papillon » à 200t/mn pendant 2 minutes. Ensuite 4,8 g d'un catalyseur de fonctionnalisation à base de lithine monohydratée dissoute dans le méthanol sont alors ajoutés en 30 secondes. Suit une phase d'homogénéïsation de 4 minutes à 400 t/mn. Puis 108g de silice traitée en surface par du tétraoctylcyclosiloxane (D4) sont incorporées à vitesse d'agitation modérée de 160t/mn et dispersés pendant 4 minutes supplémentaires à 400 t/mn. De la même façon sont chargés 144g d'une terre de diatomée de référence célite 350.

Le milieu subit alors une phase de dégazage de 8 minutes sous vide partiel de 50 mbar et sous agitation à 130 t/mn puis 24g de catalyseur PITA SM (fourni par la société Dupont : mélange de 80% de (iPrO)₂(EAA)₂Ti et 20% de méthyltriméthoxysilane, avec EAA= éthylacétoacétate) sont ensuite ajoutés sous azote et dispersés à 400 t/mn pendant 5 minutes.

Le milieu subit une deuxième phase de dégazage de 3 minutes sous 40 mbar et sous agitation à 130 t/mn. Enfin le mélange est transféré en cartouches plastiques fermées.

### g) Formulation 6 Catalyseur PITA SM - Comparatif

Dans un mélangeur équipé d'un mobile d'agitation de type « papillon » sont introduits 667 g d'huile polydiméthylsiloxane α,ω-dihydroxylée de viscosité 20000 mPa.s à 23°C, 109 g d'huile polydiméthylsiloxane α,ω-triméthylsilylée de viscosité 100 mPa.s à 23°C, 12g d'une base colorante noire contenant du noir de carbone et 27 g de vinyltriméthoxysilane (VTMO). Ce mélange est homogénéïsé par rotation du « papillon » à 200t/mn pendant 2 minutes. Ensuite 4,8 g d'un catalyseur de fonctionnalisation à base de lithine monohydratée dissoute dans le méthanol sont alors ajoutés en 30 secondes. Suit une phase d'homogénéïsation de 4 minutes à 400 t/mn. Puis 33g de silice traitée D4 sont incorporées à vitesse d'agitation modérée de 160t/mn et dispersés pendant 4 minute supplémentaires à 400 t/mn. De la même façon sont chargés 328g de carbonate Winnofil de Solvay. Le milieu subit alors une phase de dégazage de 8 minutes sous vide partiel de 50 mbar et sous agitation à 130 t/mn puis 22 g de catalyseur PITA SM de Dupont sont ensuite ajoutés sous azote et dispersés à 400 t/mn pendant 5 minutes. Le milieu subit une deuxième phase de dégazage de 3 minutes sous 40 mbar et sous agitation à 130 t/mn. Enfin le mélange est transféré en cartouches plastiques fermées.
IV-2) Puis, on applique sur un support en aluminium un joint sous la forme d'un film de 2mm d'épaisseur préparé par réticulation des formulations 1 à 6 décrites ci-dessus. Après 14 jours dans des conditions contrôlées (23°C+/-2°C et 50%+/- 5 d'humidité), la dureté Shore A et les propriétés mécaniques à la traction (résistance à la rupture et module à 100% d'allongement) sont alors mesurées à partir d'éprouvettes d'épaisseur 2mm.
IV-3) Les supports enduits sont ensuite plongés dans une huile pour moteur de référence (ELF 5W30 Diesel) et portés à 150°C pendant 70 heures. Après cette période de chauffe, ils reviennent à température ambiante toujours plongés dans l'huile puis en sont extraits. Les caractéristiques suivantes sont alors mesurées :
   - Dureté Shore A sur le film gonflé par l'huile, et
   - Propriétés mécaniques à la traction sur des éprouvettes gonflées par l'huile.
IV-4) Pour les formulations 3, 4 et 5 un test d'étanchéité à l'huile moteur chaude est également pratiqué par application sur une surface de contact d'un des 2 éléments à assembler (éléments = support en aluminium) d'un cordon à partir de la formulation à tester non réticulée. Les éléments sont assemblés en les appliquant les uns contre les autres par leur zone de contact avant que la composition ne réticule en élastomère, puis on laisse réticuler la composition en un élastomère silicone en présence d'humidité apportée par l'air ambiant de manière à former un joint d'étanchéité silicone. L'ensemble est alors immergé dans une huile pour moteur de référence. La température de l'huile est maintenue à 150°C pendant 3 jours. Après refroidissement, on mesure la force (Force de rupture de collage, unité N) qu'il faut appliquer pour décoller les deux éléments. Les résultats sont consignés dans le Tableau II ci-dessous
   Dureté Shore A (DSA) mesurée selon la norme DIN 53505,
   Résistance à la rupture (R/R) en MPa mesurée selon la norme AFNOR NF T 46002, et
   Module élastique à 100 % en MPa mesurée selon la norme précédente.

**Tableau III - Résultats des tests 2 de tenue aux huiles**

| | | Exemples Invention | | | | | Exemples Comparatifs | |
|---|---|---|---|---|---|---|---|---|
| Formulations Catalyseurs | | 1 (A3) | 2 (A4) | 3 (A4) | 4 (A4) | 4bis (A4) | 5 titanate | 6 titanate |
| Avant immersion dans l'huile Elf "Evolution" 5w30 | Dureté Shore A (14jours) | 34 | 32 | 42 | 30 | 35 | 36 | 32 |
| | Résistance à la rupture (MPa) | 1,7 | 1,9 | 3,4 | 2,4 | 3,9 | 3 | 2,8 |
| | Module à 100% (Mpa) | 0,7 | 0,7 | 1,2 | 0.5 | 0,66 | 1,0 | 0,7 |
| Après immersion dans l'huile Elf "Evolution" 5w30 | Dureté Shore A | 21 | 19 | 27 | 19 | 26 | 4 | 1 |
| | Résistance à la rupture (MPa) | 1,6 | 1,6 | 1,5 | 1,8 | Non mesurée | 0,9 | 1,3 |
| | Module à 100% | 0,6 | 0,5 | 0,8 | 0,5 | Non mesurée | 0,2 | 0,15 |
| | Test d'étanchéité - Force de rupture de collage (N) | Non mesurée | Non mesurée | 110 | >150 | Non mesurée | 30 | Non mesurée |

On remarque que les élastomères silicones assurant l'étanchéité obtenus avec les catalyseurs selon l'invention présente des propriétés mécaniques (Dureté Shore A, résistance à la rupture, module à 100%) supérieures aux comparatifs après une immersion de 70h dans une huile moteur à 150°C simulant ainsi des conditions extrêmes qui peuvent être rencontrées par des éléments en contact d'un fluide utilisé dans un groupe moto-propulseur.

Pour le test d'étanchéité à l'huile moteur chaude, on remarque que les formulations selon l'invention 3 et 4 présentent des propriétés quatre à cinq fois supérieures au comparatif (formulation 5).

### V) Tests d'adhérence qualitative (RTV-1 acétoxy - réticulant silanes de type acétoxy)

a) Formulation testée (% en poids):
   On prépare un empâtage suivant
      - 70,8% huile polydiméthylsiloxane α,ω-dihydroxylée de viscosité 50000 mPa.s
      - 6,4% huile polydiméthylsiloxane α,ω-dihydroxylée de viscosité 14000 mPa.s α,ω-dihydroxylée
      - 9,6 % huile polydiméthylsiloxane de viscosité 500 mPa.s
      - 10,4 de silice traitée diméthylsilazane
      Puis, on ajoute à cet empatâge x % du catalyseur à tester et 3,8% d'un mélange éthyltriacétoxy silane et méthyltriacétoxy silane.
b) Quantité de catalyseur ajoutée (% poids) // nombre d'équivalent (éq.)/nombre de mole d'étain
   DLDBE 0,06% // 1 éq.
   Catalyseur (A3)= 0,14% // 5 éq.
   Catalyseur (A4) = 0,10% // 5 éq.
c) Pour réaliser des tests d'adhérence qualitative, un cordon de produit préparé à partir de la formulation à tester est déposé sur un support en aluminium préalablement nettoyés. Après une durée de réticulation de 7 jours (à 23°C et 50% HR = humidité résiduelle), on réalise un pelage manuel après avoir fait une amorce de décollement à l'interface support/joint. Les résultats sont exprimés en fonction du type de rupture du cordon de produit:
   - RA si on a une rupture adhésive (le cordon se décolle du support),
   - RA+ rupture à tendance adhésive, mais nécessitant d'appliquer une force pour décoller le cordon,
   - RA++ rupture à tendance adhésive, mais nécessitant d'appliquer une force 5 importante pour décoller le cordon, et
   - RC si on a une rupture de type cohésive (le cordon rompt sous l'application d'une force très élevée, sans s'être décollé du support, même partiellement) ; dans ce cas l'adhérence sur le support est optimale.

**Tableau IV**

| | Adhésion sur support | | | | |
|---|---|---|---|---|---|
| | PMMA | Aluminium anodisé | Aluminium thermolaqué | verre | PVC |
| Catalyseur DLDBE Comparatif | RA | RA+ | RA | RC | RA |
| Catalyseur **(A3)** Invention | RA | RA++ | RA | RC | RC |
| Catalyseur **(A4)** Invention | RA | RA+ | RA | RC | RA+ |

| | | | | | |
|---|---|---|---|---|---|
| Support PMMA: = support en polyméthacrylate de méthyle Support PVC = support en polychlorure de vinyle. | | | | | |

On remarque que les élastomères préparés à partir des catalyseurs selon l'invention présente une aussi bonne adhésion que ceux préparés à partir des catalyseurs à l'étain.

## Revendications

1. Procédé d'étanchéification et d'assemblage d'au moins un composant d'un groupe moto-propulseur comprenant les étapes a) à d) suivantes:
a) on prépare une composition polyorganosiloxane **X** réticulable en élastomère par des réactions de polycondensation, ne contenant pas de catalyseur métallique et comprenant:
- une base silicone **B** comprenant au moins une huile polyorganosiloxane réticulable par réaction de polycondensation de manière à former un élastomère silicone, et
- une quantité catalytiquement efficace d'au moins un catalyseur de polycondensation **A** qui est un composé organique non silylé et répondant à la formule générale **(I):** 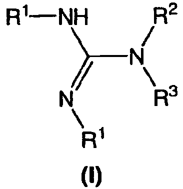 dans laquelle,
- les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
- le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine, et
- le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine,
- lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants, et
- avec la condition supplémentaire que les radicaux R¹, R² et R³ ne comprennent pas d'atome de silicium,
b) on applique ladite composition polyorganosiloxane **X** sur au moins une zone de contact dudit composant de manière continue ou discontinue et éventuellement sous la forme d'un cordon,
c) on laisse réticuler ladite composition polyorganosiloxane **X** en élastomère silicone en présence d'humidité apportée par l'air ambiant ou par addition préalable d'eau de manière à former un joint d'étanchéité profilé sur pièce, et
d) on assemble ledit composant à un autre composant du groupe moto-propulseur de manière à ce que le joint formé assure l'assemblage et l'étanchéité entre les deux composants du groupe moto-propulseur.

2. Procédé selon la revendication 1 dans lequel les étapes c) et d) sont remplacées respectivement par les étapes c1) et d1) suivantes:
c1) on met en contact la ou les zone(s) contenant ladite composition polyorganosiloxane **X** non réticulé avec une surface de contact de l'autre composant du groupe moto-propulseur et on assemble les deux composants du groupe moto-propulseur, et
d1) on laisse réticuler ladite composition polyorganosiloxane **X** en élastomère silicone en présence d'humidité apportée par l'air ambiant ou par addition préalable d'eau de manière à former un joint d'étanchéité flué assurant l'assemblage et l'étanchéité entre les deux composants du groupe moto-propulseur.

3. Procédé selon la revendication 1 dans lequel le composant du groupe moto-propulseur est choisi parmi le groupe constitué par: une culasse, un carter d'huile, un couvre-culasse, un carter de distribution, un barreau de palier, un bloc cylindre moteur, une boîte de vitesses, une pompe à eau, un boîtier de réaspiration des gaz carter, un filtre à eau, un filtre à huile, une pompe à huile, un boitier comprenant des composants électroniques d'un groupe moto-propulseur ou un carter d'embrayage.

4. Procédé selon la revendication 1 dans lequel le catalyseur de polycondensation **A** est un composé organique non silylé choisi parmi le groupe constitué par les composés **(A1)** à **(A6)** suivants:

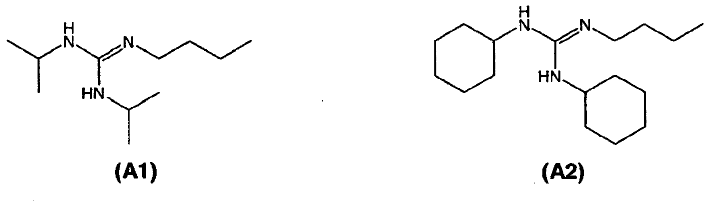

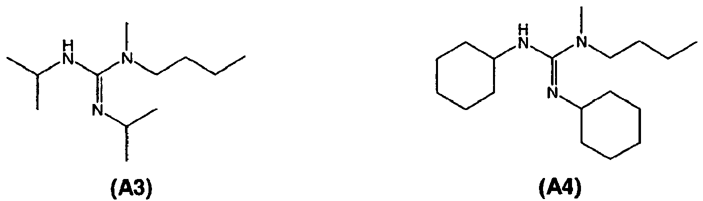

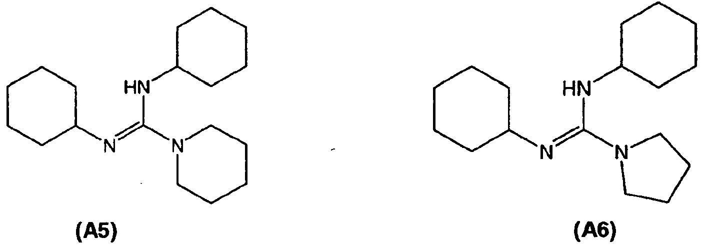

5. Procédé selon la revendication **1** dans lequel la composition polyorganosiloxane **X** réticulable en élastomère par des réactions de polycondensation comprend une quantité catalytiquement efficace d'au moins un catalyseur de polycondensation **A** tel que défini selon les revendications **1** ou 5 et une base silicone **B** comprenant:
- au moins une huile polyorganosiloxane **C** susceptible de réticuler par polycondensation en un élastomère;
- éventuellement au moins un agent de réticulation **D;**
- éventuellement au moins un promoteur d'adhérence **E;** et
- éventuellement au moins une charge minérale siliceuse, organique et/ou non siliceuse **F.**

6. Procédé selon la revendication 1 dans lequel la composition polyorganosiloxane **X** réticulable en élastomère par des réactions de polycondensation comprend:
- pour 100 parties en poids d'au moins une huile polyorganosiloxane C susceptible de réticuler par polycondensation qui est un polymère réactif α,ω-dihydroxydiorganopolysiloxane dont les radicaux organiques sont des radicaux hydrocarbonés de préférence choisi parmi le groupe constitué par: les alkyles ayant de 1 à 20 atomes de carbone ; les cycloalkyles ayant de 3 à 8 atomes de carbone ; les alcényles ayant de 2 à 8 atomes de carbone et les cycloalcényles ayant de 5 à 8 atomes de carbone ;
- de 0,1 à 60 parties en poids d'au moins un agent de réticulation **D** choisi parmi le groupe constitué par: les polyacoxysilanes, les produits provenant de l'hydrolyse partielle d'un polyalcoxysilane et les polyalcoxysiloxanes;
- de 0 à 60 parties en poids d'un promoteur d'adhérence **E** tel que décrit ci-dessus;
- de 0 à 250 parties en poids, de préférence de 5 à 200 parties en poids, d'au moins une charge minérale siliceuse, organique et/ou non siliceuse **F;**
- de 0 à 10 parties en poids d'eau,
- de 0 à 100 parties en poids d'au moins un polymère polyorganosiloxane linéaire non réactif **G** consistant dans un homopolymère ou copolymère linéaire dont, par molécule, les substituants organiques monovalents, identiques ou différents entre eux, liés aux atomes de silicium sont choisis parmi les radicaux alkyles, cycoalkyles, alcényles, aryles, alkylarylènes et arylalkylènes,
- de 0 à 20 parties en poids d'une base colorante ou d'un agent de coloration **H,**
- de 0 à 70 parties en poids de résines polyorganosiloxanes **I,** et
- de 0 à 20 parties d'additifs auxiliaires **J** connus de l'homme de métier, tels que des agents plastifiant ; des diluants organiques, des ralentisseurs de réticulation, des huiles minérales, des agents antimicrobien, des additifs de tenue thermique tels que les oxydes de titane, de fer ou de cérium, et
- de 0,1 à 50 parties en poids d'au moins un catalyseur de polycondensation **A** tel que défini selon l'une quelconque des revendications 1 ou 5.

7. Procédé selon la revendication 1 ou 6 dans lequel la composition polyorganosiloxane **X** réticulable en élastomère par des réactions de polycondensation est préparée à partir d'un système bicomposant qui se présente en deux parties **P1** et P2 distinctes destinées à être mélangées pour former ladite composition polyorganosiloxane **X,** avec l'une de ces parties comprenant le catalyseur de polycondensation **A** tel que défini selon l'une quelconque des revendications 1, 2 ou 6 et l'agent de réticulation **D** alors que l'autre partie est exempte des espèces précitées et comprend:
- pour 100 parties en poids de l'huile (ou des huiles) polyorganosiloxane(s) **C** susceptible(s) de réticuler par polycondensation en un élastomère, et
- de 0,001 à 10 partie(s) en poids d'eau.

8. Procédé selon la revendication 1 dans lequel la composition polyorganosiloxane **X** réticulable en élastomère par des réactions de polycondensation est préparée à partie d'un système monocomposant stable au stockage en l'absence d'humidité et réticulant, en présence d'eau, en élastomère, comprenant:
- au moins une huile polyorganosiloxane **C** linéaire réticulable présentant des extrémités fonctionnalisées de type alcoxy, oxime, acyle et /ou énoxy, de préférence alcoxy,
- au moins un agent de réticulation **D,**
- au moins une charge **F,** et
- au moins un catalyseur de la réaction de polycondensation qui est le catalyseur de polycondensation **A** tel que défini selon l'une quelconque des revendications 1, 2 ou 6.

9. Procédé selon la revendication 8 dans lequel l'huile polyorganosiloxane **C** présente des extrémités fonctionnalisées de type alcoxy et est préparée in situ par réaction, en présence d'une quantité catalytiquement efficace de lithine, d'un polydiméthylsiloxane branché présentant des groupements hydroxyles liés à un atome de silicium et de formule générale MₓD_{y}Q_{z} (x, y et z étant des nombres entiers) ou d'un d'un diorganopolysiloxane linéaire, comprenant un groupement hydroxy lié à un atome de silicium à chaque extrémité de chaîne, avec au moins un polyalcoxysilane de formule **(II)** suivante:
(R⁴_{)c} (R⁵)ₐ Si (OR⁶)_{4-(a+c)} **(II)**
dans laquelle:
- a est égal à 0, 1 ou 2,
- c est égal à 0, 1 ou 2,
- la somme a + c est égale à 0, 1 ou 2,
- R⁴ représente un radical monovalent hydrocarboné saturé ou non en C₁ à C₁₃, substitué ou non, aliphatique, cyclanique ou aromatique, R⁴ pouvant être identique à R⁵,
- R⁵ représente un radical monovalent hydrocarboné saturé ou non en C₁ à C₁₃, substitué ou non substitué, aliphatique, cyclanique ou aromatique, et pouvant comporter une fonction époxy, amine primaire, secondaire, tertiaire, mercapto, et
- R⁶ représente un radical organique aliphatique ayant de 1 à 8 atomes de carbone choisi notamment entre les radicaux alkyle, les radicaux alkyléther, les radicaux alkylester, les radicaux alkylcétone, les radicaux alkylcyano et les radicaux aralkyle ayant de 7 à 13 atomes de carbone, étant entendu que les groupements alcoxy du silane de formule **(II)** peuvent avoir chacun une signification différente pour R⁶ ou la même signification.

10. Utilisation de la composition polyorganosiloxane **X** réticulable en élastomère par des réactions de polycondensation telle que définie selon l'une quelconque des revendications 1 à 9 pour préparer des joints silicones d'étanchéité ayant une bonne résistance au vieillissement dans des fluides utilisés dans un groupe motopropulseur.

## Patentansprüche

1. Verfahren zum Abdichten und Montieren mindestens eines Bauteils einer Antriebsgruppe mit den folgenden Schritten a) bis d):
a) man stellt eine Polyorganosiloxanzusammensetzung **X** her, die durch Polykondensationsreaktionen zu einem Elastomer vernetzbar ist, keinen Metallkatalysator enthält und
- eine Silikonbasis **B,** die mindestens ein durch Polykondensationsreaktion zu einem Silikonelastomer vernetzbares Polyorganosiloxanöl umfasst, und
- eine katalytisch wirksame Menge mindestens eines Polykondensationskatalysators **A,** bei dem es sich um eine nichtsilylierte organische Verbindung handelt, die der folgenden allgemeinen Formel **(I)** entspricht: 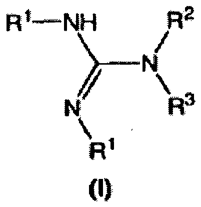 worin
- die Reste R¹ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom oder eine Fluoralkylgruppe enthalten kann, stehen,
- der Rest R² für ein Wasserstoffatom, eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine aromatische Gruppe, eine Arylalkylgruppe, eine Fluoralkylgruppe, eine Alkylamingruppe oder eine Alkylguanidingruppe steht;
- der Rest R³ für eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine Arylalkylgruppe, eine Fluoralkylgruppe, eine Alkylamingruppe oder eine Alkylguanidingruppe steht;
- dann, wenn der Rest R² nicht für ein Wasserstoffatom steht, die Reste R² und R³ zu einem 3-, 4-, 5-, 6- oder 7-gliedrigen aliphatischen Ring, der gegebenenfalls durch einen oder mehrere Substituenten substituiert ist, verbunden sein können, und
- mit der zusätzlichen Maßgabe, dass die Reste R¹, R² und R³ kein Siliciumatom enthalten,
umfasst,
b) man bringt die Polyorganosiloxanzusammensetzung **X** kontinuierlich oder diskontinuierlich und gegebenenfalls in Form einer Raupe auf mindestens eine Kontaktzone des Bauteils auf,
c) man lässt die Polyorganosiloxanzusammensetzung **X** in Gegenwart von Feuchtigkeit, die durch die Umgebungsluft oder durch vorherige Zugabe von Wasser bereitgestellt wird, zu einem Silikonelastomer vernetzen, wobei man ein Dichtungsprofil erhält, und
d) man montiert das Bauteil so auf ein anderes Bauteil der Antriebsgruppe, dass die gebildete Dichtung die Montage und Abdichtung zwischen den beiden Bauteilen der Antriebsgruppe gewährleistet.

2. Verfahren nach Anspruch 1, bei dem die Schritte c) und d) durch die folgenden Schritte c1) bzw. d1) ersetzt werden:
cl) man bringt die Zone bzw. die Zonen, die die unvernetzte Polyorganosiloxanzusammensetzung **X** enthält bzw. enthalten, mit einer Kontaktfläche des anderen Bauteils der Antriebsgruppe in Kontakt und baut die beiden Bauteile der Antriebsgruppe zusammen, und
d1)man lässt die Polyorganosiloxanzusammensetzung **X** in Gegenwart von Feuchtigkeit, die durch die Umgebungsluft oder durch vorherige Zugabe von Wasser bereitgestellt wird, so zu einem Silikonelastomer vernetzen, dass man eine Fließdichtung erhält, die die Montage und Abdichtung zwischen den beiden Bauteilen der Antriebsgruppe gewährleistet.

3. Verfahren nach Anspruch 1, bei dem man das Bauteil der Antriebsgruppe aus der Gruppe bestehend aus einem Zylinderkopf, einem Ölsumpf, einer Zylinderkopfadeckung, einem Steuerkasten, einer Lagerstange, einem Motorzylinderblock, einem Getriebe, einer Wasserpumpe, einem Kurbelgehäuseentlüftungskasten, einem Wasserfilter, einem Ölfilter, einer Ölpumpe, einem Gehäuse mit elektronischen Bauteilen einer Antriebsgruppe oder einem Kupplungsgehäuse auswählt.

4. Verfahren nach Anspruch 1, bei dem es sich bei dem Polykondensationskatalysator **A** um eine nichtsilylierte organische Verbindung aus der Gruppe bestehend aus den folgenden Verbindungen **(A1)** bis **(A6)** handelt:

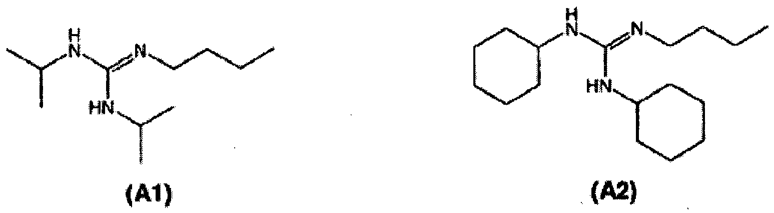

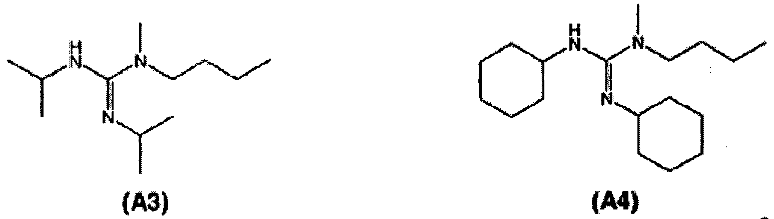

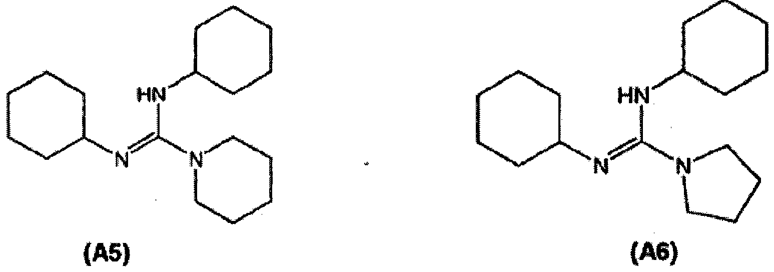

5. Verfahren nach Anspruch 1, bei dem die Polyorganosiloxanzusammensetzung **X,** die durch Polykondensationsreaktionen zu einem Elastomer vernetzbar ist, eine katalytisch wirksame Menge mindestens eines Polykondensationskatalysators **A** gemäß den Ansprüchen 1 oder 5 und eine Silikonbasis **B,** umfassend:
- mindestens ein Polyorganosiloxanöl **C,** das durch Polykondensation zu einem Elastomer vernetzt werden kann;
- gegebenenfalls mindestens ein Vernetzungsmittel **D;**
- gegebenenfalls mindestens einen Haftvermittler **E** und
- gegebenenfalls mindestens einen siliciumhaltigen, organischen und/oder nicht siliciumhaltigen mineralischen Füllstoff **F;**
umfasst.

6. Verfahren nach Anspruch 1, bei dem die Polyorganosiloxanzusammensetzung **X,** die durch Polykondensationsreaktionen zu einem Elastomer vernetzbar ist, Folgendes umfasst:
- pro 100 Gewichtsteile mindestens eines Polyorganosiloxanöls **C,** das durch Polykondensation vernetzt werden kann, wobei es sich um ein reaktives α,ω-Dihydroxydiorganopolysiloxanpolymer handelt, bei dessen organischen Resten es sich um Kohlenwasserstoffreste handelt, vorzugsweise ausgewählt aus der Gruppe bestehend aus Alkylgruppen mit 1 bis 20 Kohlenstoffatomen; Cycloalkylgruppen mit 3 bis 8 Kohlenstoffatomen; Alkenylgruppen mit 2 bis 8 Kohlenstoffatomen und Cycloalkenylgruppen mit 5 bis 8 Kohlenstoffatomen;
- 0,1 bis 60 Gewichtsteile mindestens eines Vernetzungsmittels **D** ausgewählt aus der Gruppe bestehend aus Polyalkoxysilanen, Produkten der Partialhydrolyse eines Polyalkoxysilans und Polyalkoxysiloxanen;
- 0 bis 60 Gewichtsteile eines Haftvermittlers **E** gemäß obiger Beschreibung;
- 0 bis 250 Gewichtsteile, vorzugsweise 5 bis 200 Gewichtsteile, mindestens eines siliciumhaltigen, organischen und/oder nicht siliciumhaltigen mineralischen Füllstoffs **F;**
- 0 bis 10 Gewichtsteile Wasser;
- 0 bis 100 Gewichtsteile mindestens eines unreaktiven linearen Polyorganosiloxanpolymers **G,** das aus einem linearen Homopolymer oder Copolymer besteht, in dem pro Molekül die an die Siliciumatome gebundenen einwertigen organischen Substituenten, die gleich oder voneinander verschieden sind, aus Alkyl-, Cycloalkyl-, Alkenyl-, Aryl-, Alkylarylen- und Arylalkylenresten ausgewählt sind,
- 0 bis 20 Gewichtsteile einer Farbbasis oder eines Farbmittels **H,**
- 0 bis 70 Gewichtsteile Polyorganosiloxanharze **I** und
- 0 bis 20 Teile Hilfsadditive **J,** die dem Fachmann bekannt sind, wie Weichmacher, organische Verdünnungsmittel, Vernetzungsverzögerer, Mineralöle, antimikrobielle Mittel, Wärmebeständigkeitsadditive wie Titan-, Eisen- oder Ceroxide, und
- 0,1 bis 50 Gewichtsteile mindestens eines Polykondensationskatalysators **A** gemäß einem der Ansprüche 1 oder 5.

7. Verfahren nach Anspruch 1 oder 6, bei dem man die Polyorganosiloxanzusammensetzung **X,** die durch Polykondensationsreaktionen zu einem Elastomer vernetzbar ist, aus einem Zweikomponentensystem herstellt, das in Form von zwei verschiedenen Teilen **P1** und **P2,** die zum Mischen zur Bildung der Polyorganosiloxanzusammensetzung **X** vorgesehen sind, vorliegt, wobei einer dieser Teile den Polykondensationskatalysator **A** gemäß einem der Ansprüche 1, 2 oder 6 und das Vernetzungsmittel **D** umfasst, wohingegen der andere Teil von den oben angegebenen Spezies frei ist, und Folgendes umfasst:
- pro 100 Gewichtsteile mindestens eines Polyorganosiloxanöls **C,** das durch Polykondensation zu einem Elastomer vernetzt werden kann, und
- 0,001 bis 10 Gewichtsteile Wasser.

8. Verfahren nach Anspruch 1, bei dem man die Polyorganosiloxanzusammensetzung **X,** die durch Polykondensationsreaktionen zu einem Elastomer vernetzbar ist, aus einem Einkomponentensystem herstellt, das in Abwesenheit von Feuchtigkeit lagerstabil ist und in Gegenwart von Wasser zu einem Elastomer vernetzt und Folgendes umfasst:
- mindestens ein vernetzbares lineares Polyorganosiloxanöl **C,** das funktionalisierte Enden vom Alkoxy-, Oxim-, Acyl- und/oder Enoxy-Typ, vorzugsweise vom Alkoxy-Typ, aufweist,
- mindestens ein Vernetzungsmittel **D,**
- mindestens einen Füllstoff **F** und
- mindestens einen Polykondensationsreaktionskatalysator, bei dem es sich um den Polykondensationskatalysator **A** gemäß einem der Ansprüche 1, 2 oder 6 handelt.

9. Verfahren nach Anspruch 8, bei dem das Polyorganosiloxanöl **C** funktionalisierte Enden vom Alkoxy-Typ aufweist und in situ durch Umsetzung eines verzweigten Polydimethylsiloxans, das an ein Siliciumatom gebundene Hydroxylgruppen aufweist und die allgemeine Formel MₓD_{y}Q_{z} (wobei x, y und z für ganze Zahlen stehen) hat, oder eines linearen Diorganopolysiloxans, das an jedem Kettenende eine an ein Siliciumatom gebundene Hydroxylgruppe aufweist, mit mindestens einem Polyalkoxysilan der folgenden Formel **(II):**
(R⁴)_{c}(R⁵)ₐSi(OR⁶)_{4-(a+c)} **(II)**
worin:
- a gleich 0, 1 oder 2 ist,
- c gleich 0, 1 oder 2 ist,
- die Summe a + c gleich 0, 1 oder 2 ist,
- R⁴ für einen aliphatischen, cyclanischen oder aromatischen, substituierten oder unsubstituierten, gesättigten oder ungesättigten einwertigen C₁-bis C₁₃-Kohlenwasserstoffrest steht, wobei R⁴ mit R⁵ identisch sein kann,
- R⁵ für einen aliphatischen, cyclanischen oder aromatischen, substituierten oder unsubstituierten, gesättigten oder ungesättigten einwertigen C₁-bis C₁₃-Kohlenwasserstoffrest, der eine Epoxid-, primäre, sekundäre oder tertiäre Amin- oder Mercaptofunktion enthalten kann, steht, und
- R⁶ für einen aliphatischen organischen Rest mit 1 bis 8 Kohlenstoffatomen, der insbesondere aus Alkylresten, Alkyletherresten, Alkylesterresten, Alkylketonresten, Alkylcyanoresten und Aralkylresten mit 7 bis 13 Kohlenstoffatomen ausgewählt ist, steht, mit der Maßgabe, dass die Alkoxygruppen des Silans der Formel **(II)**jeweils eine andere Bedeutung für R⁶ oder die gleiche Bedeutung haben können,
in Gegenwart einer katalytisch wirksamen Menge von Lithiumhydroxid hergestellt wird.

10. Verwendung der Polyorganosiloxanzusammensetzung **X,** die durch Polykondensationsreaktionen zu einem Elastomer vernetzbar ist, gemäß einem der Ansprüche 1 bis 9 zur Herstellung von Silikondichtungen mit guter Alterungsbeständigkeit in Fluiden, die in einer Antriebsgruppe verwendet werden.

## Claims

1. Method for sealing and assembling at least one component of a drive train, comprising the following steps a) to d):
a) a polyorganosiloxane composition **X** is prepared which is crosslinkable to elastomer by polycondensation reactions, which contains no metal catalyst, and which comprises:
- a silicone base **B** comprising at least one polyorganosiloxane oil which is crosslinkable by polycondensation reaction so as to form a silicone elastomer, and
- a catalytically effective amount of at least one polycondensation catalyst **A** which is a nonsilylated organic compound conforming to the general formula **(I):** 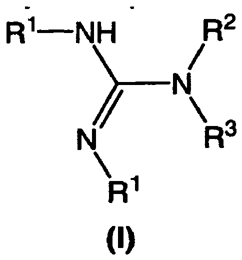 in which
- the identical or different radicals R¹ represent independently of one another a linear or branched monovalent alkyl group, a cycloalkyl group, a (cycloalkyl)alkyl group, the cyclic moiety being substituted or unsubstituted and possibly comprising at least one heteroatom or a fluoroalkyl group,
- the radical R² represents a hydrogen atom, a linear or branched monovalent alkyl group, a cycloalkyl group, an alkyl group substituted by a cyclic moiety which is substituted or unsubstituted and possibly comprises at least one heteroatom, an aromatic group, an arylalkyl group, a fluoroalkyl group or an alkylamine or alkylguanidine group, and
- the radical R³ represents a linear or branched monovalent alkyl group, a cycloalkyl group, an alkyl group which is substituted by a cyclic moiety which is substituted or unsubstituted and possibly comprises at least one heteroatom, or an arylalkyl, fluoroalkyl, alkylamine or alkylguanidine group,
- when the radical R² is not a hydrogen atom, the radicals R² and R³ may be joined to form a 3-, 4-, 5-, 6- or 7-membered aliphatic cyclic moiety optionally substituted by one or more substituents, and
- with the further condition that the radicals R¹, R², and R³ contain no silicon atom;
b) said polyorganosiloxane composition **X** is applied to at least one contact zone of said component, continuously or discontinuously, optionally in the form of a bead;
c) said polyorganosiloxane composition **X** is caused to crosslink to silicone elastomer in the presence of moisture provided by the ambient air or by prior addition of water, so as to form a profiled gasket; and
d) said component is assembled to another component of the drive train, in such a way that the joint formed provides for assembly and sealing between the two components of the drive train.

2. Method according to Claim 1, wherein steps c) and d) are replaced respectively by the following steps c1) and d1) :
c1) the zone or zones containing said noncrosslinked polyorganosiloxane composition **X** are contacted with a contact surface of the other component of the drive train, and the two components of the drive train are assembled, and
d1)said polyorganosiloxane composition **X** is caused to crosslink to silicone elastomer in the presence of moisture provided by the ambient air or by prior addition of water, so as to form a yielded gasket providing assembly and sealing between the two components of the drive train.

3. Method according to Claim 1, wherein the component of the drive train is selected from the group consisting of a cylinder head, an oil sump, a cylinder head cover, a timing case, a bearing bar, an engine cylinder block, a transmission, a water pump, a positive crankcase ventilation box, a water filter, an oil filter, an oil pump, a box comprising electronic components of a drive train, or a clutch housing.

4. Method according to Claim 1, wherein the polycondensation catalyst **A** is a nonsilylated organic compound selected from the group consisting of the following compounds **(A1)** to **(A6):**

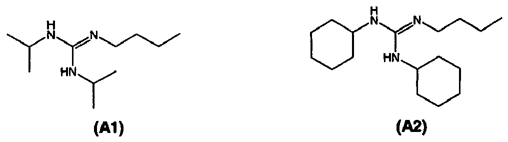

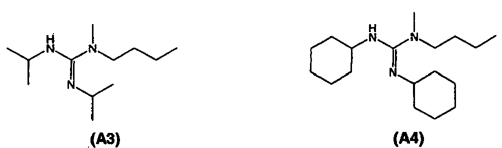

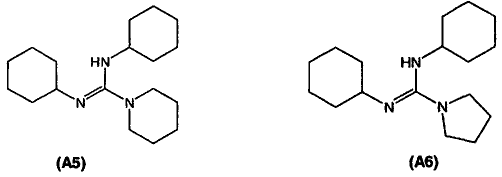

5. Method according to Claim 1, wherein the polyorganosiloxane composition **X** which is crosslinkable to elastomer by polycondensation reactions comprises a catalytically effective amount of at least one polycondensation catalyst **A** as defined in Claims 1 or 5 and a silicone base **B** comprising:
- at least one polyorganosiloxane oil **C** which is crosslinkable by polycondensation to give an elastomer;
- optionally at least one crosslinking agent **D;**
- optionally at least one adhesion promoter **E;** and
- optionally at least one nonsiliceous, organic and/or siliceous inorganic filler **F.**

6. Method according to Claim 1, wherein the polyorganosiloxane composition **X** which is crosslinkable to elastomer by polycondensation reactions comprises:
- per 100 parts by weight of at least one polyorganosiloxane oil C capable of crosslinking by polycondensation, which is a reactive α,ω-dihydroxydiorganopolysiloxane polymer in which the organic radicals are hydrocarbon radicals preferably selected from the group consisting of: alkyls having from 1 to 20 carbon atoms; cycloalkyls having from 3 to 8 carbon atoms; alkenyls having from 2 to 8 carbon atoms; and cycloalkenyls having from 5 to 8 carbon atoms;
- from 0.1 to 60 parts by weight of at least one crosslinking agent **D** selected from the group consisting of polyalkoxysilanes, the products originating from the partial hydrolysis of a polyalkoxysilane, and polyalkoxysiloxanes;
- from 0 to 60 parts by weight of an adhesion promoter **E** as described above;
- from 0 to 250 parts by weight, preferably from 5 to 200 parts by weight, of at least one nonsiliceous, organic and/or siliceous inorganic filler **F;**
- from 0 to 10 parts by weight of water,
- from 0 to 100 parts by weight of at least one nonreactive linear polyorganosiloxane polymer **G** consisting of a linear homopolymer or copolymer in which, per molecule, the mutually identical or different monovalent organic substituents bonded to the silicon atoms are selected from alkyl, cycloalkyl, alkenyl, aryl, alkylarylene, and arylalkylene radicals,
- from 0 to 20 parts by weight of a coloring base or of a colorant **H,**
- from 0 to 70 parts by weight of polyorganosiloxane resins **I,** and
- from 0 to 20 parts of auxiliary additives **J** known to the skilled person, such as plasticizers, organic diluents, crosslinking retarders, mineral oils, antimicrobial agents, and heat stabilizer additives such as titanium oxides, iron oxides or cerium oxides, and
- from 0.1 to 50 parts by weight of at least one polycondensation catalyst **A** as defined in either of Claims 1 and 5.

7. Method according to Claim 1 or 6, wherein the polyorganosiloxane composition **X** crosslinkable to elastomer by polycondensation reactions is prepared from a two-component system which takes the form of two separate parts **P1** and **P2,** which are intended to be mixed to form said polyorganosiloxane composition **X,** with one of these parts comprising the polycondensation catalyst **A** as defined in any of claims 1, 2, and 6 and the crosslinking agent **D,** while the other part is free of the aforementioned species, and comprises:
- per 100 parts by weight of the polyorganosiloxane oil or oils **C** capable of crosslinking by polycondensation to an elastomer, and
- from 0.001 to 10 part(s) by weight of water.

8. Method according to Claim 1, wherein the polyorganosiloxane composition **X** crosslinkable to elastomer by polycondensation reactions is prepared from a one-component system which is stable on storage in the absence of moisture and which crosslinks to elastomer in the presence of water, comprising:
- at least one crosslinkable linear polyorganosiloxane oil **C** which has functionalized alkoxy, oxime, acyl and/or enoxy end groups, preferably alkoxy end groups,
- at least one crosslinking agent **D,**
- at least one filler **F,** and
- at least one catalyst of the polycondensation reaction, which is the polycondensation catalyst **A** as defined in any of Claims 1, 2, and 6.

9. Method according to Claim 8, wherein the polyorganosiloxane oil **C** has functionalized end groups of alkoxy type and is prepared in situ by reacting, in the presence of a catalytically effective amount of lithium hydroxide, a branched polydimethylsiloxane having hydroxyl groups bonded to a silicon atom, and of general formula MₓD_{y}Q_{z} (where x, y, and z are integers), or a linear diorganopolysiloxane, comprising a hydroxyl group bonded to a silicon atom at each chain end, with at least one polyalkoxysilane of formula **(II)** below:
**(R⁴)c (R⁵)ₐ Si (OR⁶)_{4-(a+c)}** (II)
in which:
- a is 0, 1 or 2,
- c is 0, 1 or 2,
- the sum a + c is equal to 0, 1 or 2,
- R⁴ represents an aliphatic, cyclanic or aromatic, substituted or unsubstituted, and saturated or unsaturated monovalent C₁ to C₁₃ hydrocarbon radical, it being possible for R⁴ to be identical to R⁵,
- R⁵ represents an aliphatic, cyclanic or aromatic, substituted or unsubstituted, and saturated or unsaturated C₁ to C₁₃ monovalent hydrocarbon radical, which may comprise an epoxy, primary, secondary or tertiary amine, or mercapto function, and
- R⁶ represents an aliphatic organic radical having from 1 to 8 carbon atoms which is selected in particular from alkyl radicals, alkyl ether radicals, alkyl ester radicals, alkyl ketone radicals, alkylcyano radicals, and aralkyl radicals having from 7 to 13 carbon atoms, it being understood that the alkoxy groups of the silane of formula **(II)** may each have a different meaning for R⁶, or the same meaning.

10. Use of the polyorganosiloxane composition **X** crosslinkable to elastomer by polycondensation reactions, as defined in any of Claims 1 to 9, for preparing silicone gaskets exhibiting high aging resistance in fluids used in a drive train.
